(19) Europäisches Patentamt
European Patent Office
Office européen des brevets

(11) EP 2 205 682 B1

(12) **EUROPÄISCHE PATENTSCHRIFT**

(45) Veröffentlichungstag und Bekanntmachung des Hinweises auf die Patenterteilung:
**09.03.2011 Patentblatt 2011/10**

(21) Anmeldenummer: **08802234.8**

(22) Anmeldetag: **16.09.2008**

(51) Int Cl.:
***C09B 67/22*** $^{(2006.01)}$ ***C09B 67/04*** $^{(2006.01)}$
***G03F 7/00*** $^{(2006.01)}$ ***H01L 51/00*** $^{(2006.01)}$
***C09D 11/00*** $^{(2006.01)}$

(86) Internationale Anmeldenummer:
**PCT/EP2008/007700**

(87) Internationale Veröffentlichungsnummer:
**WO 2009/049736 (23.04.2009 Gazette 2009/17)**

(54) **DIKETOPYRROLOPYRROL-PIGMENTZUSAMMENSETZUNG ZUR VERWENDUNG IN COLORFILTERN**

DIKETOPYRROLOPYRROLE PIGMENT COMPOSITION FOR USE IN COLOR FILTERS

COMPOSITION PIGMENTAIRE A BASE DE DICETOPYRROLOPYRROLES, DESTINEE A ETRE UTILISEE DANS DES FILTRES COLORES

(84) Benannte Vertragsstaaten:
**CH DE FR GB LI**

(30) Priorität: **17.10.2007 DE 102007049682**
**08.07.2008 DE 102008032091**

(43) Veröffentlichungstag der Anmeldung:
**14.07.2010 Patentblatt 2010/28**

(73) Patentinhaber: **Clariant Finance (BVI) Limited**
**Road Town, Tortola (VG)**

(72) Erfinder:
- **REIPEN, Tanja**
**55124 Mainz (DE)**
- **REICHWAGEN, Jens**
**3600 Thun (CH)**
- **GANSCHOW, Matthias**
**65195 Wiesbaden (DE)**
- **PLÜG, Carsten**
**64367 Mühltal/Niederbeerbach (DE)**
- **SCHNEIDER, Lars**
**65835 Liederbach (DE)**

(74) Vertreter: **Hütter, Klaus et al**
**Clariant Produkte (Deutschland) GmbH**
**Patent Management**
**Am Unisys-Park 1**
**65843 Sulzbach (DE)**

(56) Entgegenhaltungen:
**EP-A- 0 181 290** **EP-A- 0 640 603**
**EP-A- 1 104 789** **EP-A- 1 411 092**
**EP-A- 1 715 007** **US-A- 5 869 625**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 2 205 682 B1

## Beschreibung

Die vorliegende Erfindung betrifft eine Pigmentzusammensetzung aus Verbindungen der Formel (1), (11) und (111), ihre Herstellung sowie die Verwendung dieses neuen Produkts als Pigment.

Für viele Anwendungen von organischen Pigmenten ist eine sehr gute Dispergierbarkeit und eine hohe Hitzestabilität erforderlich, wie zum Beispiel bei der Einfärbung von Metalliclacken oder der Verwendung in Farbfiltern.

Zur Herstellung von Farbfiltern werden besonders feinteilige Pigmente eingesetzt, um die Partikel-Streuung, die zu einer Herabsetzung des Kontrastverhältnisses führt, weitgehend auszuschließen.

Für die Messung des Kontrastverhältnisses (KV) wird die Lichtintensität nach Durchstrahlen einer pigmentierten Lackschicht auf einem transparenten Substrat bestimmt, bei der sich das Substrat zwischen zwei Polarisatoren befindet. Das Kontrastverhältnis gibt das Verhältnis der Lichtintensitäten bei parallelen und senkrecht stehenden Polarisatoren an.

$$KV = \frac{Licht\,\mathrm{int}\,ensität\,(parallel)}{Licht\,\mathrm{int}\,ensität\,(senkrecht)}$$

Die kommerziell erhältlichen Handelsprodukte genügen jedoch nicht immer allen Anforderungen der Technik. Insbesondere bestand ein Verbesserungsbedarf hinsichtlich der Partikelgröße, Dispergierbarkeit und der Hitzestabilität dieser feinteiligen Pigmente ohne negativen Einfluss auf Chroma und Farbton.

Aus der EP-A-0 094 911 sind Pigmentzusammensetzungen aus Diketopyrrolopyrrolen (DPPs) bekannt, die durch Mischsynthese aus zwei unterschiedlichen Nitrilen A und B und Bernsteinsäurediestern hergestellt werden können.

Aus der EP-A-0 181 290 sind Pigmentzusammensetzungen aus Diketopyrrolopyrrolen (DPPs) bekannt, die durch Mischsynthese aus zwei unterschiedlichen Nitrilen A und B und Bemsteinsäurediestem hergestellt werden, die jedoch aufgrund ihrer Teilchengröße nicht für die Verwendung in Farbfiltern geeignet sind.

Die EP-A-1 411 092 beschreicht hochkristalline Pigmente, z.B. PR254, zum Einsatz in Farbfiltern.

Aus der EP-A-0 962 499 sind Mischsynthesen mit äquimolaren Mengen verschiedener Nitrile mit Bernsteinsäurediestern in Gegenwart eines Kristallwachstumsinhibitors bekannt. Die Umsetzung von 4-Chlorbenzonitril mit substituiertem oder unsubstituiertem Cyanobiphenyl ist nicht beschrieben.

Aus der WO 20021085 987 sind Pigmentzusammensetzungen aus Diketopyrrolopyrrolen für wässrige Lackanwendungen bekannt, die durch Mischsynthese aus zwei unterschiedlichen Nitrilen A und B und Bernsteinsäurediestern hergestellt werden. Die Umsetzung von 4-Chlorbenzonitril mit substituiertem oder unsubstituiertem Cyanobiphenyl ist nicht erwähnt.

In der EP-A-1 411 091 wird ein aufwändiges zweistufiges Verfahren zur Darstellung feinkristalliner Pigmentpartikel beschrieben, das aus einer Kombination aus Trockenmahlung und Salzknetung besteht, um eine Rekristallisation zu größeren Teilchen wirksam zu verhindern.

US-A-5,869,625 beschreibt Mischungen von opaken DPP Pigmenten und salzbildenden Azopigmenten für Automobillack-Anwendungen.

EP-A-1 715 007 beschreibt den Einsatz von Disazokondensationsdispergatoren auf Basis von C.I. Pigment Rot 242 für die Anwendung in Farbfiltern. US 2006 185558 A beschreibt den Einsatz einer Mischung aus sulfonsäuregruppenhaltigen DPP-Pigmenten, sulfonsäuregruppenfreien DPP-Pigmenten und Disazokondensationsdispergatoren auf Basis von C.I. Pigment Rot 242 für die Anwendung in Farbfiltern.

Es bestand die Aufgabe, eine Diketopyrrolopyrrol-Pigmentzusammensetzung insbesondere für Farbfilteranwendungen zur Verfügung zu stellen, die sowohl eine gute Dispergierbarkeit in organischen Lacksystemen, eine Feinteiligkeit der Pigmentkristalle mit enger Teilchengrößenverteilung, eine hohe Rekristallisationsstabilität während der Zerkleinerung, eine hohe Hitzestabilität, als auch eine hohe Farbtonreinheit, Brillanz und einen hohen Kontrastwert aufweist.

Es würde gefunden, dass eine Mischung mit einem bestimmten Mengenverhältnis von Bis(4-Chlor-Phenyl)-Diketopyrrolopyrrol (1), (4-Chlor-Phenyl)-(X-Biphenyl)-Diketopyrrolopyrrol (II) und Bis(X-Biphenyl)-Diketopyrrolopyrrol (III), sowie dessen Herstellverfahren diese Aufgabe überraschenderweise löst.

Die vorliegende Erfindung betrifft eine Pigmentzusammensetzung aus Verbindungen der Formel (I), (II) und (III), gekennzeichnet durch eine mittlere Teilchengröße $d_{50}$ von 10 bis 60 nm, vorzugsweise 15 bis 50 nm, wobei weniger als 5 Volumen-% der Teilchen größer als 70 nm sind,

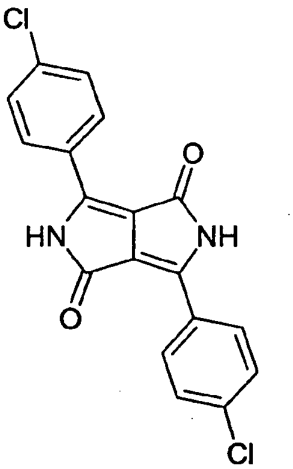

(I)

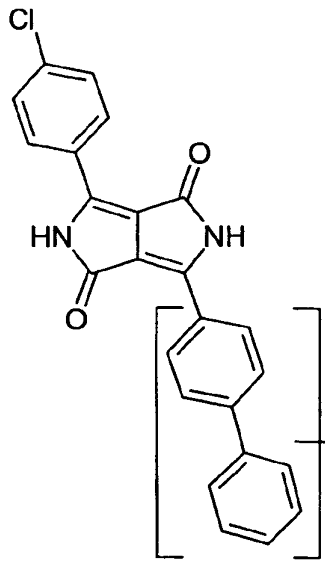

(II)

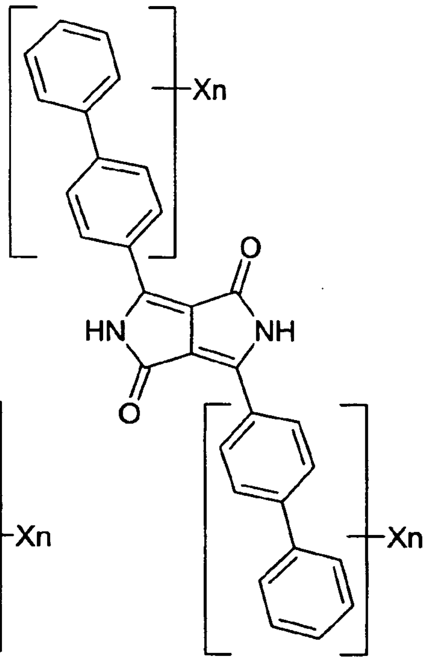

(III)

erhältlich durch Umsetzung von 1 Mol eines Bernsteinsäurediesters mit 2 Mol einer Mischung von Nitrilen A-CN und B-CN, wobei im Nitrilgemisch A-CN und B-CN im Molverhältnis 99,5 zu 0,5 bis 85 zu 15, bevorzugt 98 zu 2 bis 90 zu 10,
**[0017]** insbesondere 97 zu 3 bis 93 zu 7, zueinander stehen, und wobei A-CN 4-Chlorbenzonitril bedeutet und B-CN ein Nitril der Formel (IV) ist,

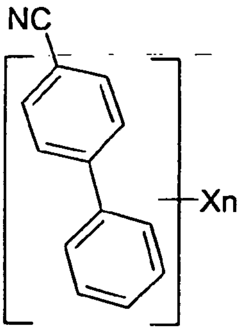

(IV)

worin

n eine Zahl von 0 bis 4, vorzugsweise 0 bis 2, insbesondere Null, darstellt; und

X OH, F, Cl, Br, CN, $CF_3$, Nitro, $C_1$-$C_8$-Alkyl, $C_5$-$C_7$-Cycloalkyl, $C_2$-$C_8$-Alkenyl, $C_1$-$C_8$-Alkoxy, Phenyl, Benzyl ist.

Die Teilchengrößenverteilung der erfindungsgemäßen Pigmentzusammensetzung ist vorzugsweise einer Gauss-Verteilung angenähert, in der die Standardabweichung Sigma vorzugsweise kleiner als 30 nm, besonders bevorzugt kleiner als 20 nm, ist. In der Regel liegen die Standardabweichungen zwischen 5 und 30 nm, vorzugsweise zwischen 6 und 25 nm, insbesondere zwischen 7 und 20 nm.
Die Standardabweichung Sigma (σ) entspricht der positiven Quadratwurzel der Varianz. Die Varianz v ist die Summe der quadrierten Abweichungen vom Mittelwert dividiert durch die Zahl der Proben minus 1.

Die erfindungsgemäße Pigmentzusammensetzung ist ferner durch einen $d_{95}$-Wert von kleiner oder gleich 70 nm gekennzeichnet.

Das Länge- zu Breiteverhältnis der Pigmentteilchen der erfindungsgemäßen Pigmentzusammensetzung liegt bevorzugt zwischen 2:1 und 1:1.

Gegenstand der vorliegenden Erfindung ist auch ein Verfahren zur Herstellung der erfindungsgemäßen Pigmentzusammensetzungen durch Umsetzung von Bernsteinsäurediestern mit 4-Chlorbenzonitril und einem Nitril der Formel (IV) in den vorstehend angegebenen Mengenverhältnissen, in einem organischen Lösemittel, in Gegenwart einer starken Base und bei erhöhter Temperatur unter Bildung eines Pigmentalkalisalzes, anschließender Hydrolyse des Pigmentalkalisalzes in Wasser und/oder Alkohol und anschließender Feinverteilung durch Salzknetung.

Besonders überraschend ist, dass die erfindungsgemäßen Pigmentzusammensetzungen im Gegensatz zu reinem P.R. 254 während der Feinverteilung durch Salzknetung auch bei hohen Temperaturen rekristallisationsstabil bleiben, d. h. das bei einem Finish sonst übliche Teilchenwachstum findet nicht statt, so dass auf die Anwesenheit eines Kristallwachstumsinhibitors verzichtet werden.

Die Gesamtkonzentration der Nitrile im organischen Lösemittel beträgt zweckmäßigerweise 0,5 bis 5 mol/l. Das molare Verhältnis der starken Base zum Bernsteinsäurediester beträgt zweckmäßigerweise 0,1 bis 10 Mol Base auf 1 Mol Bernsteinsäurediester.

Die Reaktionstemperatur für die Bildung des Pigmentalkalisalzes beträgt zweckmäßigerweise 60 bis 140 °C, bevorzugt 80 bis 120 °C.

Bei den zu verwendenden Bernsteinsäurediestern kann es sich um Dialkyl-, Diaryl- oder Monoalkylmonoarylester handeln, wobei auch die Bemsteinsäuredialkylester und -diarylester unsymmetrisch sein können. Bevorzugt werden symmetrische Bernsteinsäurediester, insbesondere symmetrische Bernsteinsäuredialkylester, verwendet. Beispiele für geeignete Bernsteinsäurediester sind in der EP-A-0 640 603 beschrieben.

Die Umsetzung des Bernsteinsäurediesters mit den Nitrilen wird in einem organischen Lösemittel durchgeführt. Als Lösemittel eignen sich beispielsweise primäre, sekundäre oder tertiäre Alkohole mit 1 bis 10 C-Atomen, vorzugsweise tert-Butanol und tert-Amylalkohol. Beispiele für geeignete Lösemittel sind in der EP-A-0 640 603 beschrieben.

Die Herstellung des Pigmentalkalisalzes erfolgt in Gegenwart einer starken Base. Geeignete starke Basen sind insbesondere die Alkalimetalle selbst, wie Lithium, Natrium oder Kalium, oder Alkaliamide, wie Lithium-, Natrium- oder Kaliumamid, oder Alkalihydride, wie Lithium-, Natrium- oder Kaliumhydrid, oder Erdalkali- oder Alkalialkoholate, die sich insbesondere von primären, sekundären oder tertiären aliphatischen Alkoholen mit 1 bis 10 C-Atomen ableiten, wie z. B. Lithium-, Natrium- oder Kaliummethylat, -ethylat, -n-propylat, -isopropylat, n-butylat, -sek.-butylat, -tert.-butylat, -2-methyl-2-butylat, -2-methyl-2-pentylat, -3-methyl-3-pentylat, -3-ethyl-3-pentylat. Auch Gemische der genannten Basen können verwendet werden.

Bevorzugt sind Alkalialkoholate, wobei Alkali insbesondere Natrium oder Kalium bedeutet, und das Alkoholat sich bevorzugt von einem sekundären oder tertiären Alkohol ableitet. Besonders bevorzugte starke Basen sind daher z. B. Natrium- oder Kalium-isopropylat, -sek.-butylat, -tert.-butylat und -tert.-amylat. Dabei können die Alkalialkoholate auch in situ hergestellt werden, indem der entsprechende Alkohol mit dem Alkalimetall, Alkalihydrid oder Alkaliamid umsetzt wird.

Die Herstellung des Na- oder K-Amylats kann durch Zugabe von Schwermetallen und -salzen, wie Fe, Co, Ni, Zn oder Sn beschleunigt werden (analog zu EP-B1-1 086 067).

Zur Hydrolyse des Pigmentalkalisalzes können als Hydrolysemittel Wasser oder ein oder mehrere organische, protische Lösemittel verwendet werden. Als protische Lösemittel kommen z. B. Alkohole, vorzugsweise mit 1 bis 4 C-Atomen, wie Methanol oder Ethanol, in Betracht. Es können auch Wasser und Alkohol in beliebigen Kombinationen verwendet werden. Die Hydrolyse kann auch in Gegenwart von organischen aprotischen Lösemitteln durchgeführt werden.

Die Hydrolyse kann direkt durch Zugabe eines Hydrolysemittels zur Reaktionssuspension, oder indirekt, durch Zugabe der Reaktionssuspension zum Hydrolysemittel, geschehen. Die Hydrolysemittel Wasser sowie organisches protisches Lösemittel können in beliebiger Reihenfolge und auch als Mischungen zugegeben und/oder vorgelegt werden. Auch eine gleichzeitige Zugabe einzelner Komponenten zu einer Vorlage ist möglich. Es kann von Vorteil sein, einen Puffer während der Hydrolyse zu verwenden, wie beispielsweise einen Phosphat-, Acetat-, Citronensäure- oder Triethanolamin-Puffer. Die Temperatur bei der Hydrolyse kann -20 °C bis 200 °C betragen, bevorzugt -5 bis 180 °C, insbesondere 0 bis 160 °C, gegebenenfalls findet die Hydrolyse unter Druck statt. Dabei können Reaktionssuspension und Hydrolysemittel auch unterschiedliche Temperatur haben. Beispielsweise kann die Hydrolyse auch mittels Wasserdampf geschehen. Die Gesamtmenge an Hydrolysemittel beträgt zweckmäßigerweise eine mindestens stöchiometrische Menge bezogen auf Base. Beispielsweise kann Wasser und/oder ein organisches, protisches Lösemittel zwischen 0,5 und 50 Gew.-Teilen auf 1 Teil des entstandenen Pigments eingesetzt werden.

Für die Feinverteilung wird die Salzknetung mit einem kristallinen anorganischen Salz in Gegenwart eines organischen Lösemittels verwendet. Als kristallines anorganisches Salz kommen beispielsweise Aluminiumsulfat, Natriumsulfat, Calciumchlorid, Kaliumchlorid oder Natriumchlorid in Betracht, bevorzugt Natriumsulfat, Natriumchlorid und

Kaliumchlorid.

Als organisches Lösemittel kommen beispielsweise Ketone, Ester, Amide, Sulfone, Sulfoxide, Nitroverbindungen, Mono-, Bis- oder Tris-hydroxy-$C_2$-$C_{12}$-alkane, die mit $C_1$-$C_8$-alkyl und einer oder mehreren Hydroxygruppen substituiert sein können, in Betracht. Besonders bevorzugt sind mit Wasser mischbare hochsiedende organische Lösemittel auf Basis von monomeren, oligomeren und polymeren $C_2$-$C_3$-Alkylenglykolen, wie z. B. Diethylenglykol, Diethylenglykolmonomethyl- und ethylether, Triethylenglykol, Triethylenglykolmonomethyl- und ethylether, Dipropylenglykol, Dipropylenglykolmonomethyl- und ethylether, Propylenglykolmonomethyl- und ethylether und flüssige Polyethylen- und Polypropylenglykole, N-Methylpyrrolidon sowie weiterhin Triacetin, Dimethylformamid, Dimethylacetamid, Ethyl-methylketon, Cyclohexanon, Diacetonalkohol, Butylacetat, Nitromethan, Dimethylsulfoxid und Sulfolan.

Das Gewichtsverhältnis zwischen dem anorganischen Salz und dem Pigment beträgt bevorzugt (2 bis 10) zu 1, insbesondere (3 bis 7) zu 1.

Das Gewichtsverhältnis zwischen dem organischen Lösemittel und dem anorganischen Salz beträgt bevorzugt (1 ml : 10 g) bis (2 ml : 7 g).

Das Gewichtsverhältnis zwischen dem organischen Lösemittel und der Summe aus anorganischem Salz und Pigment beträgt bevorzugt (1 ml : 2 g) bis (1 ml : 10 g).

Die Temperatur während der Knetung kann zwischen 40 und 140 °C, vorzugsweise 60 bis 120°C, betragen. Die Knetdauer beträgt zweckmäßigerweise 4 h bis 32 h, bevorzugt 8 h bis 20 h.

Nach der Salzknetung wird das anorganische Salz und das organische Lösemittel zweckmäßigerweise durch Waschen mit Wasser entfernt und die so erhaltene Pigmentkomposition nach üblichen Verfahren getrocknet.

Das nach der erfindungsgemäßen Feinverteilung erhaltene Material kann als Suspension, Filterkuchen oder trockenes Material gegebenenfalls einer Lösungsmittelnachbehandlung unterzogen werden, um eine homogenere Teilchenform zu erhalten, ohne die Teilchengröße merklich zu erhöhen. Bevorzugt ist die Verwendung von Wasser oder wasserdampfflüchtigen Lösungsmitteln wie Alkoholen und aromatischen Lösungsmitteln, besonders bevorzugt verzweigte oder unverzweigte $C_1$-$C_6$-Alkohole, Toluol, Xylol, Chlorbenzol, Dichlorbenzol, Nitrotoluol oder Nitrobenzol meist unter erhöhter Temperatur, beispielsweise bis 200 °C, und gegebenenfalls unter erhöhtem Druck.

Gegenstand der Erfindung ist weiterhin eine Pigmentzubereitung aus Pigmenten der Formel (I), (II) und (III), gekennzeichnet durch eine mittlere Teilchengröße $d_{50}$ von 10 bis 60 nm, vorzugsweise 15 bis 50 nm, wobei weniger als 5 Volumen-% der Teilchen größer als 70 nm sind,

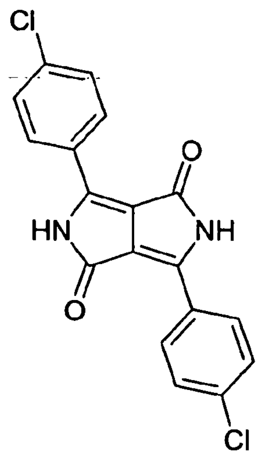

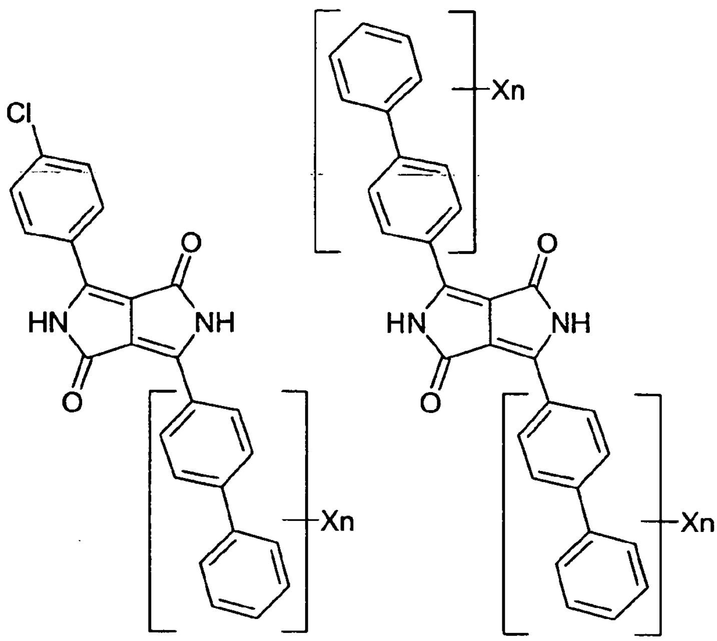

(I) (II) (III)

wobei

n eine Zahl von 0 bis 4, vorzugsweise 0 bis 2, insbesondere Null, darstellt; und

X OH, F, Cl, Br, CN, $CF_3$, Nitro, $C_1$-$C_8$-Alkyl. $C_5$-$C_7$-Cycloalkyl, $C_2$-$C_8$-Alkenyl, $C_1$-$C_8$-Alkoxy, Phenyl, Benzyl ist;

und mindestens einen Dispergator aus der Gruppe der unverlackten, sulfogruppenhaltigen Monoazofarbstoffe.

Der Anteil der Pigmente der Formel (I), (II) und (III) untereinander ist vorzugsweise 99,5 bis 70 zu 0,1 bis 30 zu 0,1 bis 15%, insbesondere 98 bis 85 zu 1 bis 15 zu 0,1 bis 7,5%.

Die Pigmentmischung (I), (II) und (III) kann entweder durch Mischen der Einzelkomponenten, oder vorzugsweise durch Mischsynthese hergestellt werden, wie vorstehend beschrieben. Die zur Herstellung der Diketopyrrolopyrrol-Pigmente zum Einsatz kommenden Ausgangsverbindungen, Lösemittel, Reagenzien und Verfahrensbedingungen sind dem Fachmann aus dem eingangs erwähnten Stand der Technik bekannt.

Bei den Dispergatoren aus der Gruppe der unverlackten, sulfogruppenhaltigen Monoazofarbstoffe handelt es sich vorzugsweise um Verbindungen der Formel (IV), (V), (VI) oder (VII)

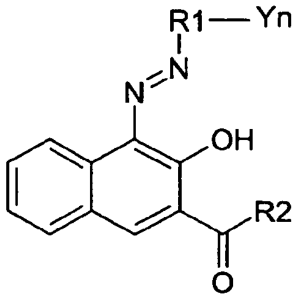
(IV)

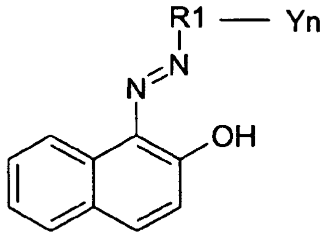
(V)

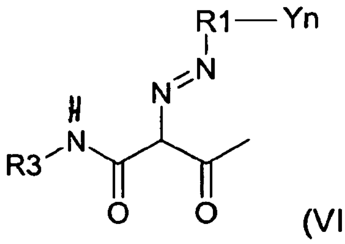
(VI)

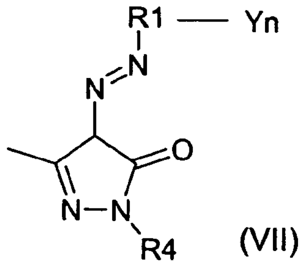
(VII)

worin

R1 ein aromatischer Rest mit 1, 2 oder 3 aromatischen Ringen, wobei die Ringe kondensiert vorliegen oder durch eine Bindung verknüpft sein können, oder ein heterocyclischer Rest mit 1, 2 oder 3 Ringen, enthaltend 1,2,3 oder 4 Heteroatome aus der Gruppe O, N und S; oder eine Kombination davon; wobei die genannten Aromaten- und Heteroaromaten-Reste durch 1, 2, 3 oder 4 Substituenten aus der Gruppe OH, CN, F, Cl, Br, $NO_2$, $CF_3$, $C_1$-$C_6$-Alkoxy, S-$C_1$-$C_6$-Alkyl, $NHCONH_2$, $NHC(NH)NH_2$, NHCO-$C_1$-$C_6$-Alkyl, $C_1$-$C_6$-Alkyl, COOR5. CONR5R6. NR5R6, $SO_3$R5, $SO_2$-NR5R6 oder $COO$-$E^+$ substituiert sein können, wobei R5 und R6 gleich oder verschieden sind und Wasserstoff, Phenyl oder $C_1$-$C_6$-Alkyl und $E^+$ Wasserstoff, Lithium, Natrium, Kalium, Rubidium, Cäsium oder ein unsubstituiertes Ammoniumion bedeuten;

Y $SO_3$- $E^+$ oder Z-$SO_3^-$ $E^+$, wobei Z $C_1$ - $C_{10}$-Alkylen oder Phenylen bedeutet;

n die Zahl von 1, 2 oder 3;

R2 -$OR^8$ oder -$NHR^8$ bedeutet, wobei $R^8$ H, $C_1$-$C_6$-Alkyl, Benzyl, ein aromatischer Rest mit 1, 2 oder 3 aromatischen Ringen, wobei die Ringe kondensiert vorliegen oder durch eine Bindung verknüpft sein können, oder ein heterocyclischer Rest mit 1, 2 oder 3 Ringen, enthaltend 1, 2, 3 oder 4 Heteroatome aus der Gruppe O, N und S; oder eine Kombination davon; wobei die genannten Aromaten- und Heteroaromaten-Reste jeweils durch 1, 2, 3 oder 4 Substituenten aus der Gruppe OH, $C_1$-$C_6$-Alkoxy. S-$C_i$-$C_6$-Alkyl, Halogen, wie F, Cl, Br, $NHCONH_2$, $NHC(NH)NH_2$, NHCO- $C_1$-$C_6$-Alkyl, $C_1$-$C_6$-Alkyl, Nitro, COOR5. CONR5R6, $SO_3$R5, $SO_2$-NR5R6 $NR^9R^{10}$, $SO_3^-E^+$ oder

COO-$E^+$ substituiert sein können, wobei R5 und R6 gleich oder verschieden sind und Wasserstoff, Phenyl oder $C_1$-$C_6$-Alkyl bedeuten; $R^9$ und $R^{10}$ gleich oder verschieden sind und Wasserstoff, Phenyl oder $C_1$-$C_6$-Alkyl bedeuten;

R3 und R4 jeweils ein aromatischer Rest mit 1, 2 oder 3 aromatischen Ringen, wobei die Ringe kondensiert vorliegen oder durch eine Bindung verknüpft sein können, oder ein heterocyclischer Rest mit 1, 2 oder 3 Ringen, enthaltend 1, 2, 3 oder 4 Heteroatome aus der Gruppe O, N und S; oder eine Kombination davon; wobei die genannten Aromaten- und Heteroaromaten-Reste jeweils durch 1, 2, 3 oder 4 Substituenten aus der Gruppe OH, $C_1$-$C_6$-Alkoxy, S-$C_1$-$C_6$-Alkyl, Halogen, wie F, Cl, Br, $NHCONH_2$, $NHC(NH)NH_2$, NHCO- $C_1$-$C_6$-Alkyl, $C_1$-$C_6$-Alkyl, Nitro, COOR5. CONR5R6, $SO_3R5$, $SO_2$-NR5R6, $NR^9R^{10}$, $SO_3^-E^+$ oder $COO^-E^+$ substituiert sein können, wobei R5 und R6 gleich oder verschieden sind und Wasserstoff, Phenyl oder $C_1$-$C_6$-Alkyl bedeuten; $R^9$ und $R^{10}$ gleich oder verschieden sind und Wasserstoff, Phenyl oder $C_1$-$C_6$-Alkyl bedeuten.

In den Monoazofarbstoffen hat der Rest - R1 - Yn folgende bevorzugte Bedeutungen, wobei die freie Valenz am Phenylring oder Naphthylring die Bindung zur Diazo-Gruppe darstellt:

(i) aus der Gruppe der *p*-Amino-Benzolsulfonsäuren:

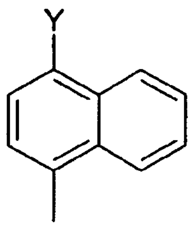
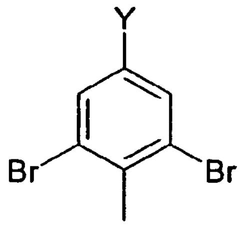
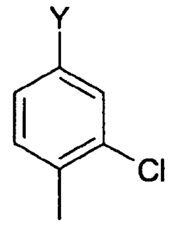
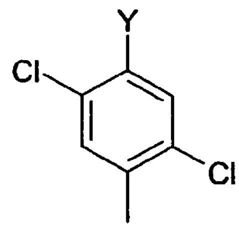
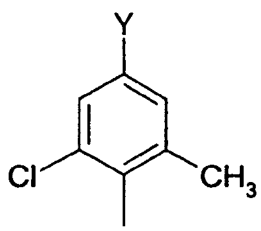
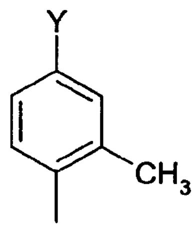
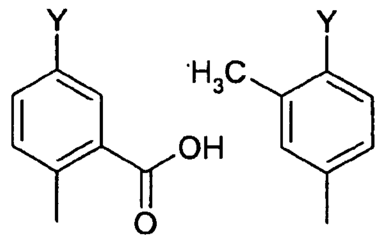
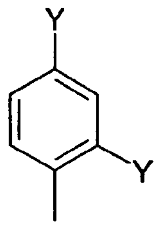
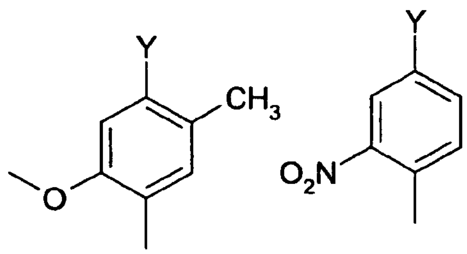
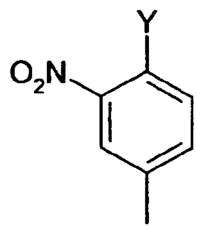

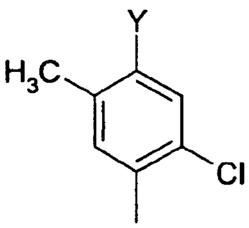

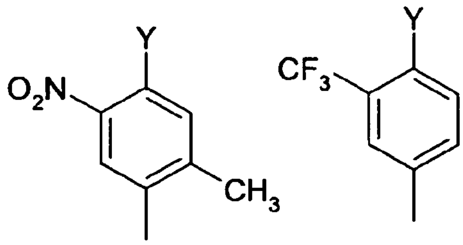

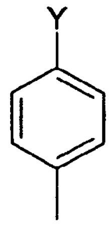

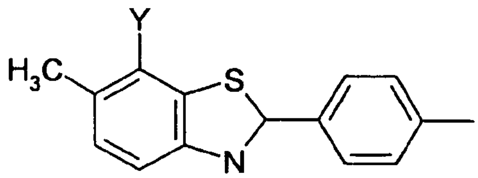

(ii) aus der Gruppe der *m*-Amino-Benzolsulfonsäuren:

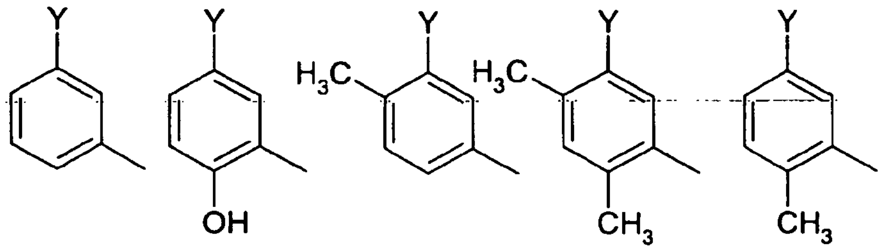

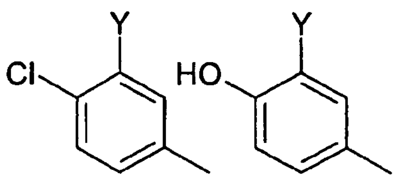

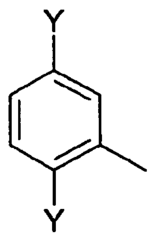

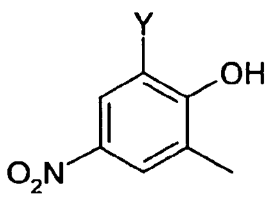

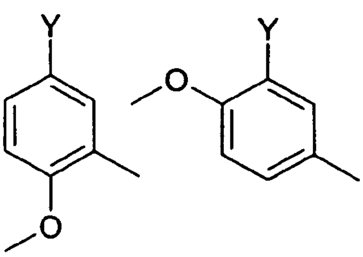

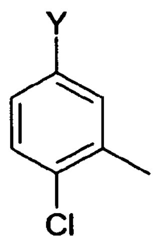

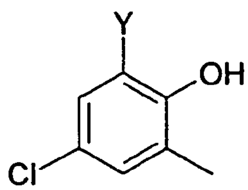

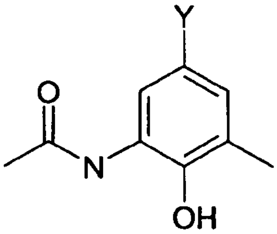
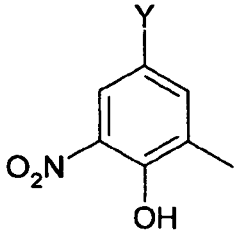
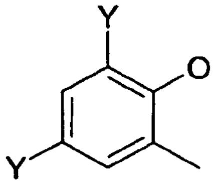
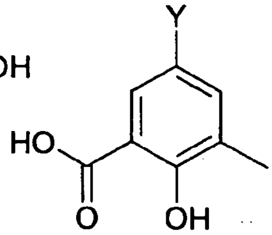

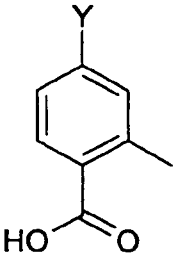
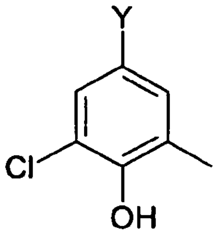
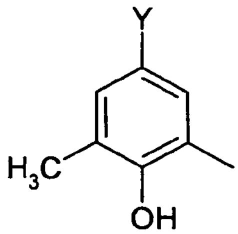
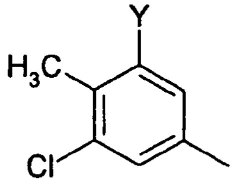

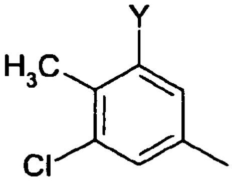
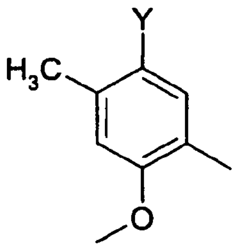
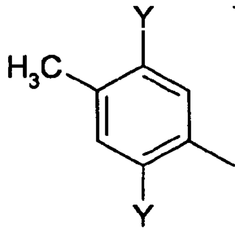
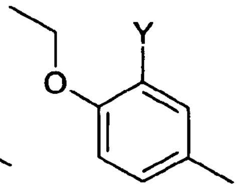

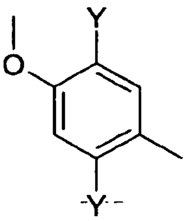
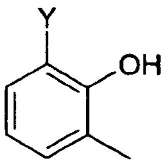
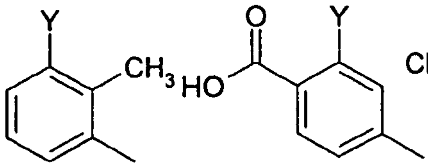
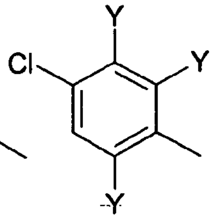

(iii) aus der Gruppe der o-Amino-Benzolsulfonsäuren:

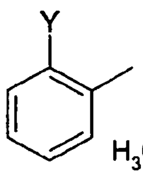
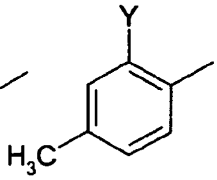
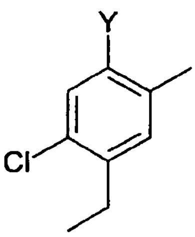
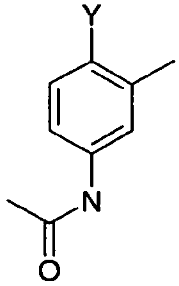

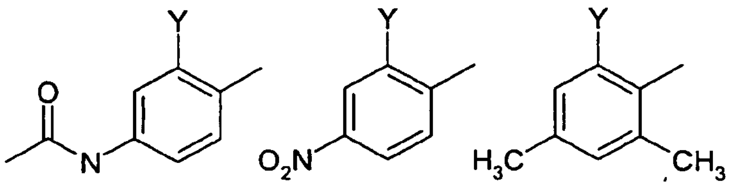

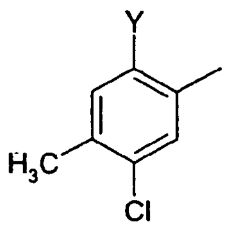

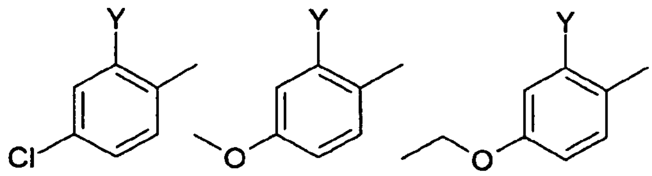

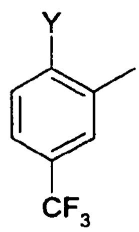

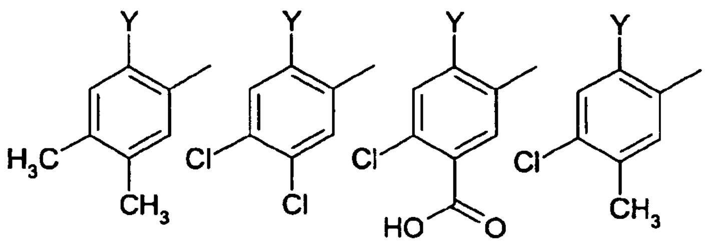

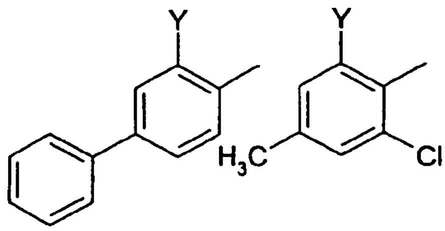

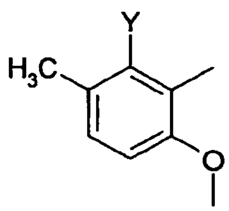

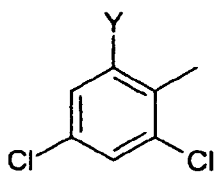

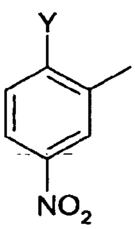

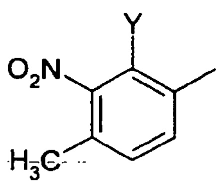

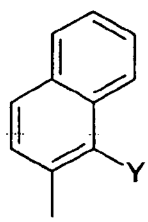

Besonders bevorzugte Reste aus der Gruppe - R1 - Yn sind:

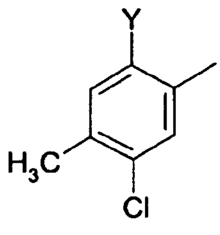 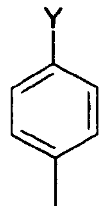 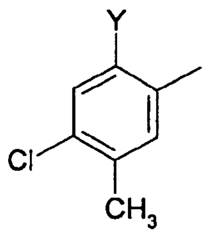

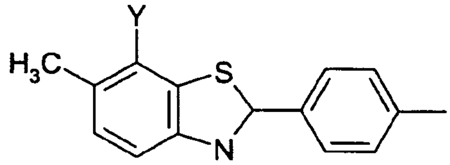 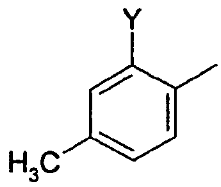

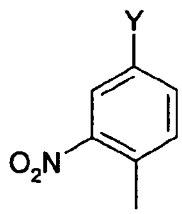 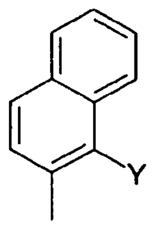

Bevorzugte Verbindungen der Formel (IV) im Sinne der Erfindung: In einer ersten Ausführungsform hat der Rest -R2 die Bedeutung OH oder O-$C_1$-$C_6$-Alkyl.

In einer alternativen Ausführungsform bedeutet der Rest -CO-R2 eine Amidgruppe mit R2 gleich $NH_2$,

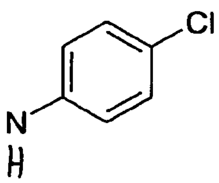 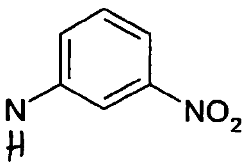 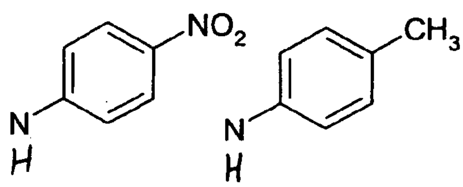

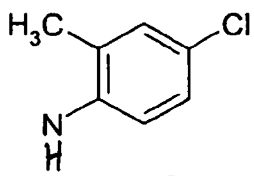 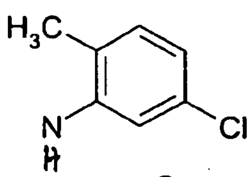 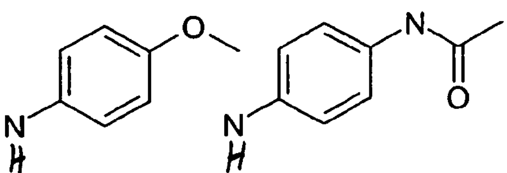

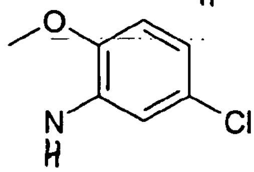 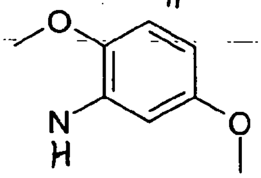 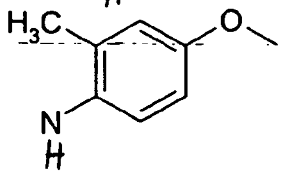

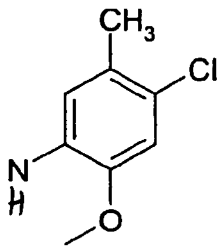 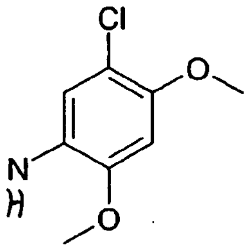 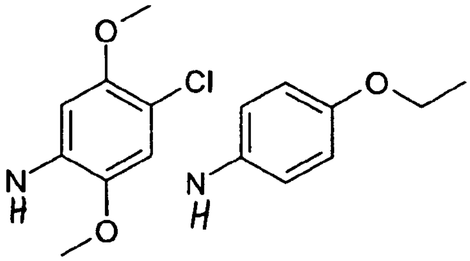

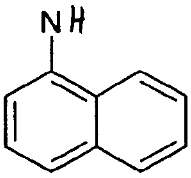 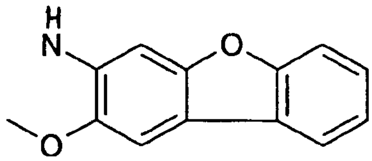 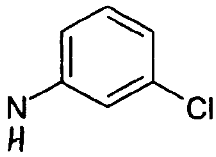

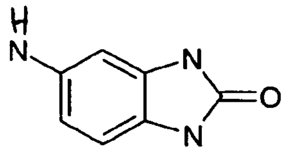

wobei in den vorstehenden Formeln die Bindung zur Carbonylgruppe über die freie Aminogruppe (N -) des Aromatenringes erfolgt.

Besonders bevorzugte Reste aus der Gruppe - R2 sind:

OH einerseits, sowie

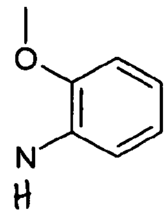 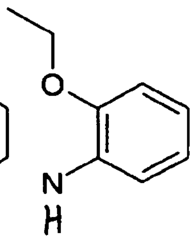 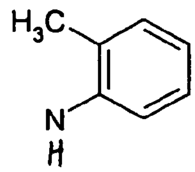

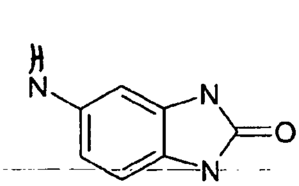 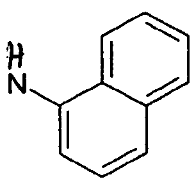

Bevorzugte Verbindungen der Formel (VI) im Sinne der Erfindung sind solche mit folgenden Resten -R3, wobei die freie Valenz am Phenylring die Bindung zum Stickstoff darstellt:

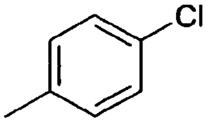
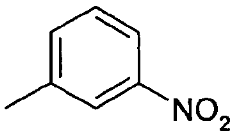
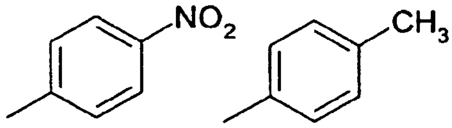

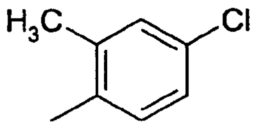
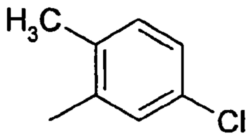
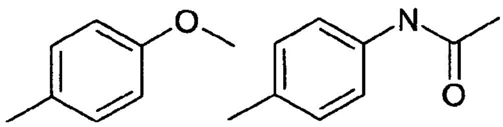

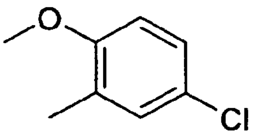
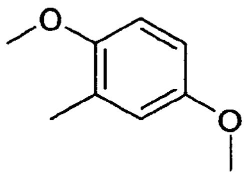
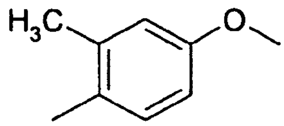

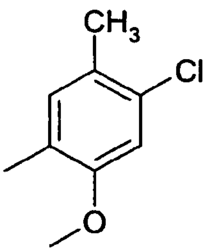
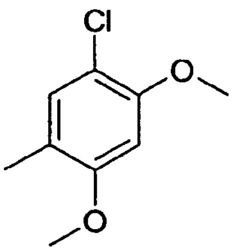
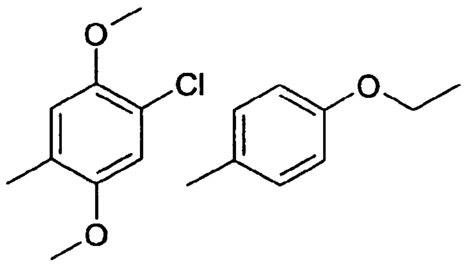

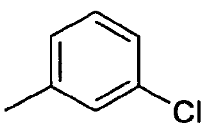
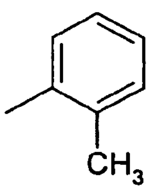

Besonders bevorzugte Reste aus der Gruppe - R3 sind:

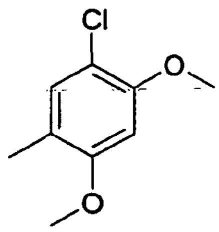
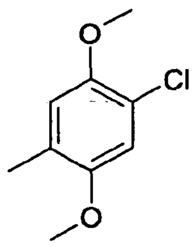

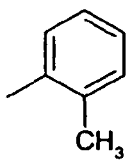
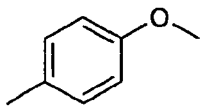

Bevorzugte Verbindungen der Formel (VII) im Sinne der Erfindung sind solche mit folgenden Resten - R4, wobei die freie Valenz am Phenylring die Bindung zum Stickstoff darstellt:

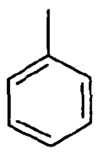
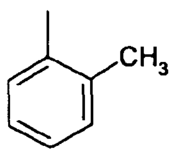
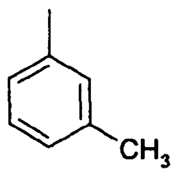
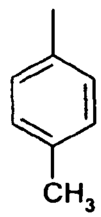

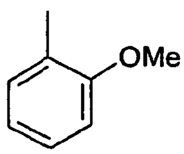
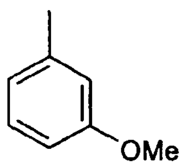
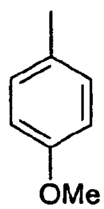
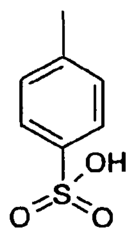

Besonders bevorzugte Reste aus der Gruppe - R4 sind

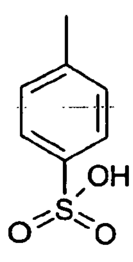
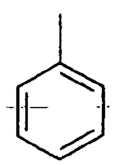

Ganz besonders bevorzugt sind die Monoazo-Farbstoffe der Formeln:

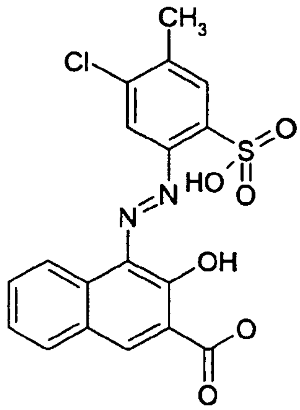

(VIII)

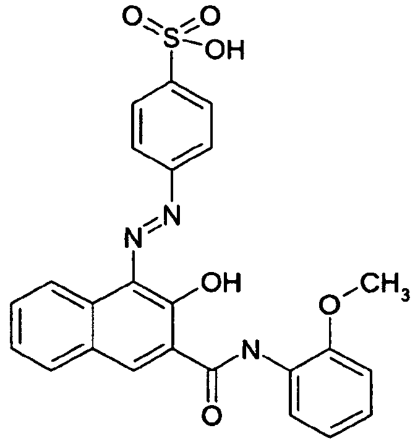

(IX)

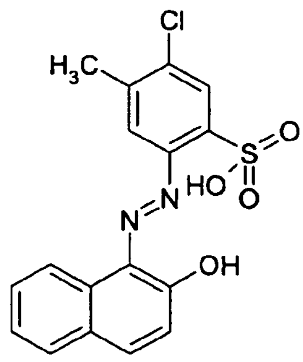

(X)

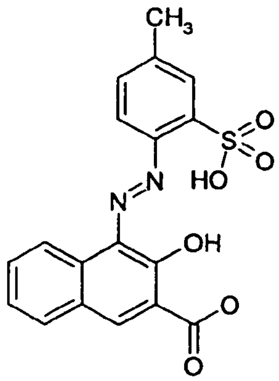

(XI)

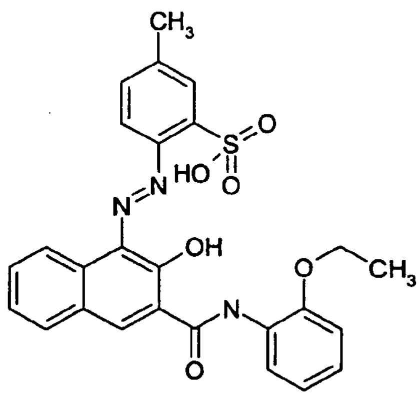

(XII)

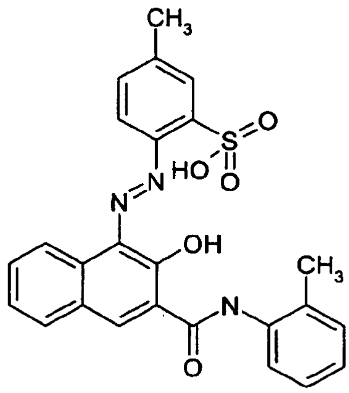

(XIII)

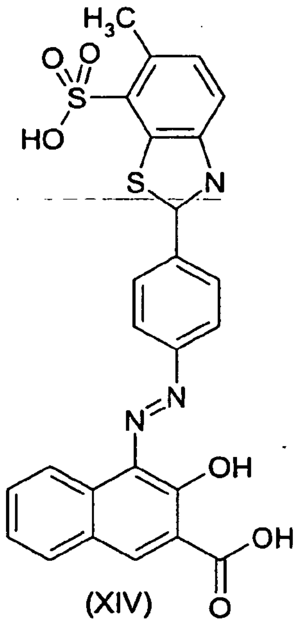

(XIV)

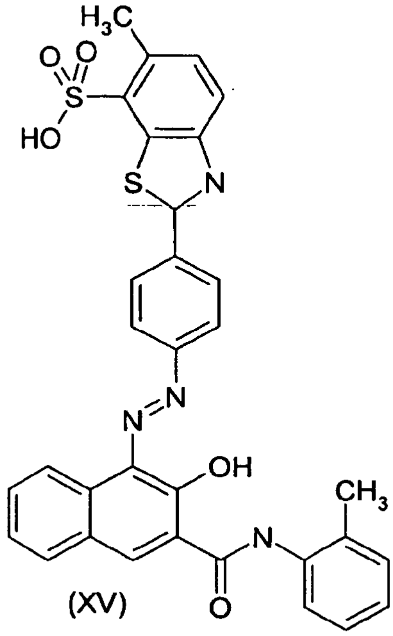

(XV)

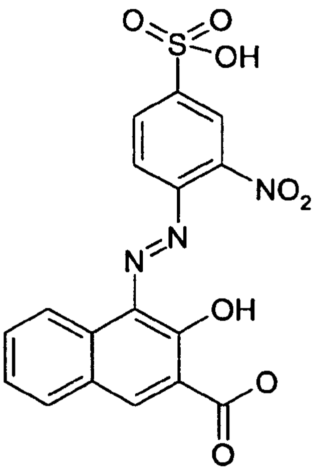

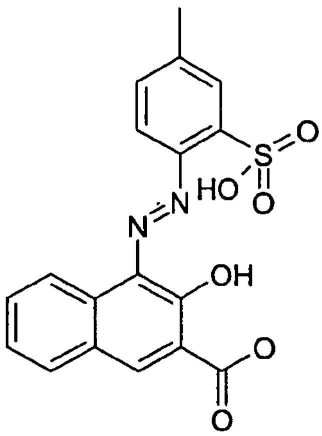

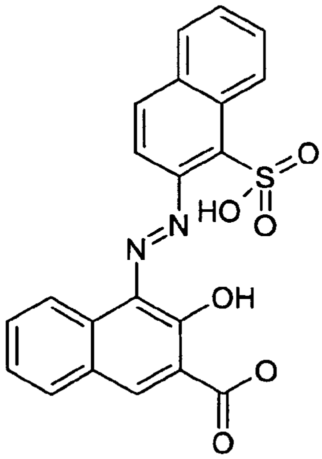

(XVI) (XVII) (XVIII)

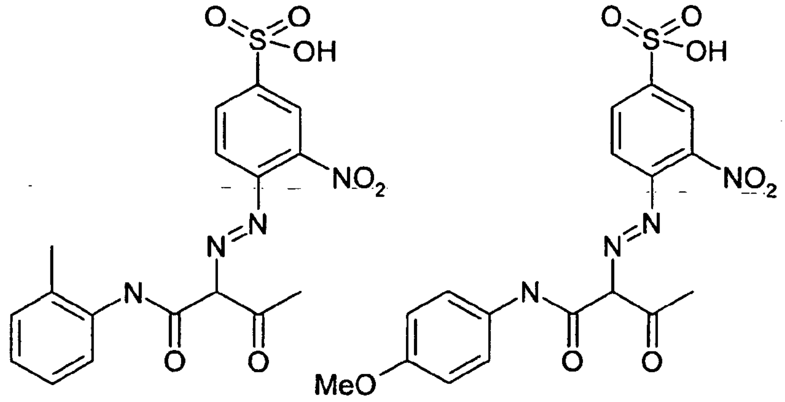

(XIX) (XX)

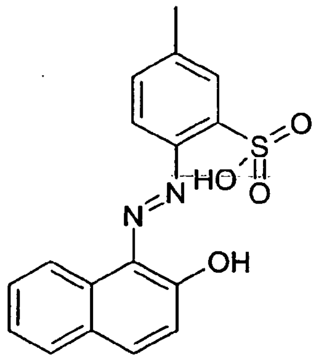

(XXI)

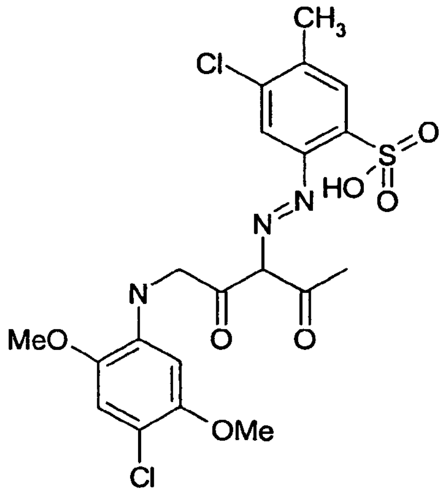

(XXII)

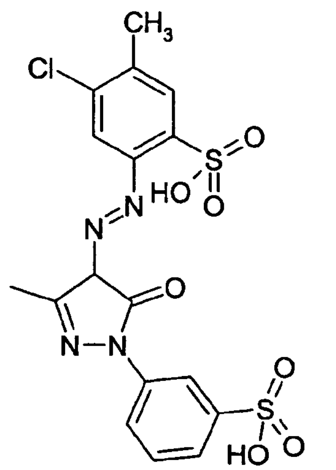

(XXIII)

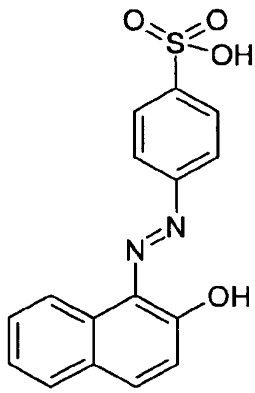

(XXIV)

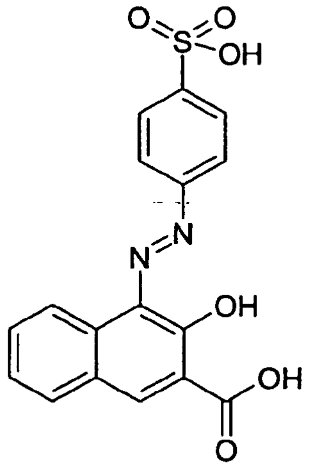

(XXV)

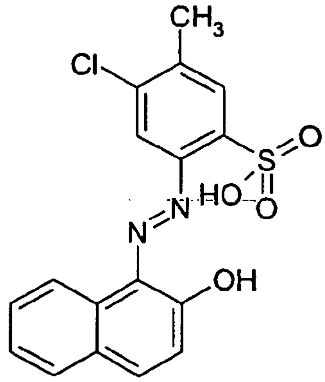

(XXVI)

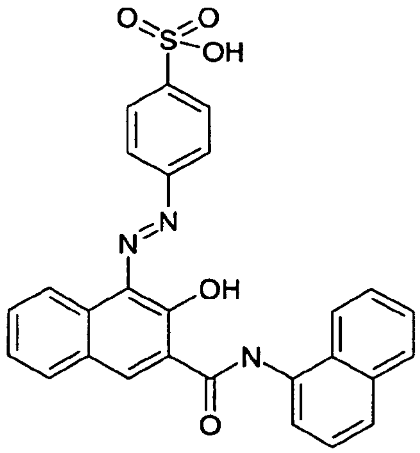

(XXVII)

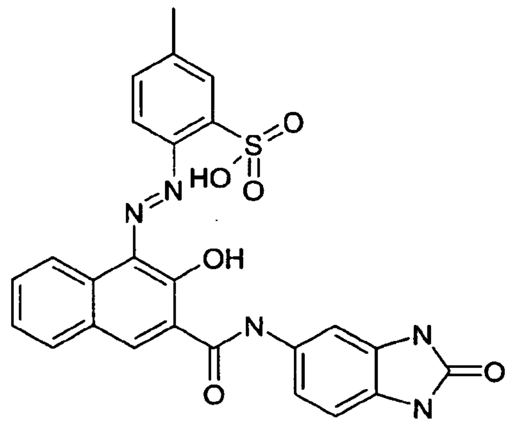

(XXVIII)

Die unverlackten, sulfogruppenhaltigen Monoazofarbstoffe sind an sich bekannte Verbindungen und lassen sich nach bekannten Verfahren durch Diazotierung und Azokupplung herstellen.

Die erfindungsgemäße Pigmentzusammensetzung kann noch weitere übliche Hilfsmittel oder Zusatzstoffe enthalten, wie beispielsweise Tenside, Dispergiermittel, Füllstoffe, Stellmittel, Harze, Wachse, Entschäumer, Antistaubmittel, Extender, Antistatika, Konservierungsmittel, Trocknungsverzögerungsmittel, Netzmittel, Antioxidantien, UV-Absorber und Lichtstabilisatoren, vorzugsweise in einer Menge von 0,1 bis 15 Gew.-%, insbesondere 0,5 bis 10 Gew.-%, bezogen auf das Gesamtgewicht der Pigmentzusammensetzung.

Bevorzugte Dispergiermittel sind die Pigmentdispergatoren der Formel (5) oder (6)

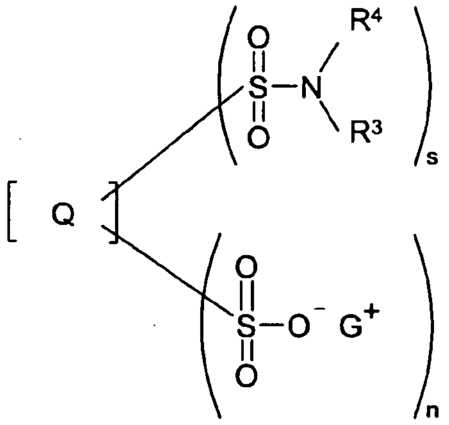

(5)

worin

Q ein Rest eines organischen Pigments aus der Gruppe der Perinon-, Chinacridon-, Chinacridonchinon-, Anthanthron-, Indanthron-, Dioxazin-, wie beispielsweise Triphendioxazine, Diketopyrrolopyrrol-, Indigo-, Thioindigo-, Thiazinindigo-, Isoindolin-, Isoindolinon-, Pyranthron-, Isoviolanthron-, Flavanthron- oder Anthrapyrimidin-Pigmente ist;

s eine Zahl von 1 bis 5, vorzugsweise 1 bis 3, darstellt;

n eine Zahl von 0 bis 4, vorzugsweise 0,1 bis 2, darstellt, wobei die Summe von s und n 1 bis 5 beträgt;

$R^3$ einen verzweigten oder unverzweigten, gesättigten oder ungesättigten, aliphatischen Kohlenwasserstoffrest mit 1 bis 20 C-Atomen, oder einen $C_5$-$C_7$-Cycloalkylrest, oder einen araliphatischen oder aromatischen Rest mit 1, 2 oder 3 aromatischen Ringen, wobei die Ringe kondensiert vorliegen oder durch eine Bindung verknüpft sein können, oder einen heterocyclischen Rest mit 1, 2 oder 3 Ringen, enthaltend 1, 2, 3 oder 4 Heteroatome aus der Gruppe O, N und S, oder eine Kombination davon bedeutet: wobei die genannten Kohlenwasserstoff-, Cycloalkyl-, Aromaten-, Araliphaten- und Heteroaromaten-Reste durch 1, 2, 3 oder 4 Substituenten aus der Gruppe OH, CN, F, Cl, Br, $NO_2$, $CF_3$, $C_1$-$C_6$-Alkoxy, S-$C_1$-$C_6$-Alkyl, $NHCONH_2$, $NHC(NH)NH_2$, NHCO-$C_1$-$C_6$-Alkyl. $C_1$-$C_6$-Alkyl, $COOR^5$, $CONR^5R^6$, $NR^5R^6$, $SO_3R^5$, $SO_2$-$NR^5R^6$, $SO_3^-E^+$ oder $COO^-E^+$ substituiert sein können, wobei $R^5$ und $R^6$ gleich oder verschieden sind und Wasserstoff, Phenyl oder $C_1$-$C_6$-Alkyl bedeuten;

$R^4$ Wasserstoff oder $R^3$ bedeutet;

$E^+$, $G^+$ unabhängig voneinander $H^+$ oder das Äquivalent $M^{p+}/m$ eines Metallkations $M^{p+}$ aus der 1. bis 5. Hauptgruppe oder aus der 1. oder 2. oder der 4. bis 8. Nebengruppe des Periodensystems der chemischen Elemente bezeichnet, wobei m eine der Zahlen 1, 2 oder 3 und p die Zahl 1, 2 oder 3 bedeutet; oder ein substituiertes oder unsubstituiertes Ammoniumion bezeichnet;

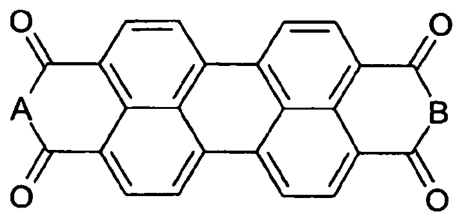

(6)

worin

A einen bivalenten Rest -O-, $-NR^3-$, $-NR^{16}-SO_3^-\ G^+$,

B einen bivalenten Rest $-NR^{16}-SO_3^-\ G^+$ . wobei $R^{16}$ für eine geradkettige oder verzweigte $C_1$-$C_6$-Alkylenkette steht und $R^3$ und $G^+$ die vorstehend genannten Bedeutungen besitzen.

In bevorzugten Pigmentdispergatoren der Formel (5) bedeuten

Q ein Rest eines organischen Pigments aus der Gruppe der Chinacridon-, Dioxazin- oder Diketopyrrolopyrrol-Pigmente;

$R^3$ $C_1$-$C_6$-Alkyl, Benzyl, Phenyl, die jeweils durch 1,2,3 oder 4 Substituenten aus der Gruppe OH, $C_1$-$C_6$-Alkoxy, S-$C_1$-$C_6$-Alkyl, $NHCONH_2$, $NHC(NH)NH_2$, NHCO-$C_1$-$C_6$-Alkyl, $C_1$-$C_6$-Alkyl, $COOR^5$, $CONR^5R^6$, $NR^5R^6$, $SO_3R^5$, $SO_2$-$NR^5R^6$. $SO_3^-E^+$ oder $COO^-E^+$ substituiert sein können, wobei $R^5$ und $R^6$ gleich oder verschieden sind und Wasserstoff, Phenyl oder $C_1$-$C_6$-Alkyl bedeuten;

$R^4$ Wasserstoff,

$E^+$, $G^+$ Wasserstoff, ein Erdalkalimetall, ein Alkalimetall oder ein Metall der dritten Hauptgruppe, insbesondere Li, Na, K, Ca, Sr, Ba, Al oder ein Ammoniumion.

In besonders bevorzugten Pigmentdispergatoren der Formel (5) bedeuten

Q ein Rest eines organischen Pigments aus der Gruppe der Diketopyrrolopyrrol-Pigmente, bevorzugt C.I. Pigment Red 255 oder 264;

$R^3$ $C_1$-$C_6$-Alkyl, das durch 1, 2, 3 oder 4 Substituenten aus der Gruppe $NHCONH_2$, $NHC(NH)NH_2$, NHCO-$C_1$-$C_6$-Alkyl, $COOR^5$, $NR^5R^6$, $COO^-E^+$ substituiert sein kann, wobei $R^5$ und $R^6$ gleich oder verschieden sind und Wasserstoff, Phenyl oder $C_1$-$C_6$-Alkyl bedeuten;

$R^4$ Wasserstoff,

$E^+$, $G^+$ Wasserstoff, ein Erdalkalimetall oder ein Alkalimetall oder ein Metall der dritten Hauptgruppe, insbesondere Li, Na, K, Ca, Sr, Ba, Al oder ein Ammoniumion.

In bevorzugten Pigmentdispergatoren der Formel (6) bedeuten

A ein bivalenter Rest $-NR^3-$ und

B die vorstehenden bevorzugten Bedeutungen,

$G^+$ Wasserstoff oder ein Alkalimetall, insbesondere Li, Na oder K.

Besonders bevorzugte Pigmentzubereitungen im Sinne der Erfindung enthalten einen basischen Pigmentdispergator der Formel (29)

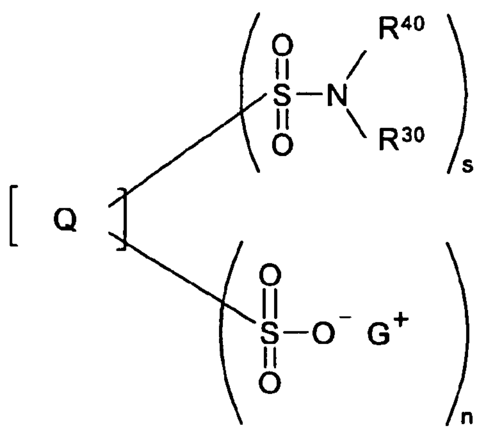

(29)

worin

Q ein Rest eines organischen Pigments aus der Gruppe der Perinon-, Chinacridon-, Chinacridonchinon-, Anthanthron-, Indanthron-, Dioxazin-, wie beispielsweise Triphendioxazine, Diketopyrrolopyrrol-, Indigo-, Thioindigo-, Thiazinindigo-, Isoindolin-, Isoindolinon-, Pyranthron-, Isoviolanthron-, Flavanthron- oder Anthrapyrimidin-Pigmente ist;

s eine Zahl von 1 bis 5, vorzugsweise 1 bis 3, darstellt;

n eine Zahl von 0 bis 4, vorzugsweise 0,1 bis 2, darstellt; wobei die Summe von s und n 1 bis 5 beträgt und s größer als n ist;

$R^{30}$ einen verzweigten oder unverzweigten, gesättigten oder ungesättigten, aliphatischen Kohlenwasserstoffrest mit 1 bis 20 C-Atomen, oder einen $C_5$-$C_7$-Cycloalkylrest, oder einen araliphatischen oder aromatischen Rest mit 1, 2 oder 3 aromatischen Ringen, wobei die Ringe kondensiert vorliegen oder durch eine Bindung verknüpft sein können, oder einen heterocyclischen Rest mit 1, 2 oder 3 Ringen, enthaltend 1, 2, 3 oder 4 Heteroatome aus der Gruppe O, N und S, oder eine Kombination davon bedeutet; wobei die genannten Kohlenwasserstoff-, Cycloalkyl-, Aromaten-, Araliphaten- und Heteroaromaten-Reste durch 1, 2, 3 oder 4 Substituenten aus der Gruppe OH, CN, F, Cl, Br, $NO_2$, $CF_3$, $C_1$-$C_6$-Alkoxy. S-$C_1$-$C_6$-Alkyl, $NHCONH_2$, $NHC(NH)NH_2$, NHCO-$C_1$-$C_6$-Alkyl, $C_1$-$C_6$-Alkyl, $CONR^5R^6$, $NR^5R^6$ substituiert sein können, wobei $R^5$ und $R^6$ gleich oder verschieden sind und Wasserstoff, Phenyl oder $C_1$-$C_6$-Alkyl bedeuten;

$R^{40}$ Wasserstoff oder $R^{30}$ bedeutet;

$G^+$ $H^+$, ein Alkalimetall oder ein substituiertes oder unsubstituiertes Ammoniumion bezeichnet.

In bevorzugten Pigmentdispergatoren der Formel (29) bedeuten

Q ein Rest eines organischen Pigments aus der Gruppe der Chinacridon-, Dioxazin- oder Diketopyrrolopyrrol-Pigmente;

$R^{30}$ $C_1$-$C_6$-Alkyl, Benzyl, Phenyl, die jeweils durch 1, 2, 3 oder 4 Substituenten aus der Gruppe OH, $C_1$-$C_6$-Alkoxy, S-$C_1$-$C_6$-Alkyl, $NHCONH_2$, $NHC(NH)NH_2$, NHCO-$C_1$-$C_6$-Alkyl. $C_1$-$C_6$-Alkyl, $CONR^5R^6$, $NR^5R^6$, substituiert sein können, wobei $R^5$ und $R^6$ gleich oder verschieden sind und Wasserstoff, Phenyl oder $C_1$-$C_6$-Alkyl bedeuten;

$R^{40}$ Wasserstoff,

$G^+$ Wasserstoff, Li, Na, K oder ein Ammoniumion.

In besonders bevorzugten Pigmentdispergatoren der Formel (29) bedeuten

Q ein Rest eines organischen Pigments aus der Gruppe der Diketopyrrolopyrrol-Pigmente, bevorzugt C.I. Pigment Red 255 oder 264, oder der Chinacridon-Pigmente, bevorzugt C.I. Pigment Violet 19 oder Pigment Red 122;

$R^{30}$ $C_1$-$C_6$-Alkyl, das durch $NR^5R^6$substituiert ist, wobei $R^5$ und $R^6$ gleich oder verschieden sind und Wasserstoff oder $C_1$-$C_6$-Alkyl bedeuten;

$R^{40}$ Wasserstoff,

$G^+$ Wasserstoff, Li, Na, K oder ein Ammoniumion.

Der Anteil der Pigmentdispergatoren der Formel (29) ist vorzugsweise zwischen 0 und 30 Gew.-%, besonders bevorzugt zwischen 1 und 25 Gew.%, bezogen auf die eingesetzte Mischung der Pigmente der Formeln (I) bis (III).

Der Anteil des unverlackten, sulfogruppenhaltigen Monoazofarbstoffes ist vorzugsweise zwischen 1 und 30 Gew.-% , besonders bevorzugt zwischen 2 und 25 Gew.-% , bezogen auf die eingesetzte Mischung der Pigmente der Formeln (I) bis (III).

Besonders bevorzugte Pigmentzubereitungen enthalten

1 bis 25 Gew.-%, insbesondere 5 bis 15 Gew.-%, des unverlackten, sulfogruppenhaltigen Monoazofarbstoffes, und 1 bis 25 Gew.-%, insbesondere 5 bis 15 Gew.%, des Pigmentdispergators der Formel (29), bezogen auf die eingesetzte Mischung der Pigmente der Formeln (I) bis (III).

Das Gewichtsverhältnis der Pigmentdispergatoren der Formel (29) und der Monoazofarbstoffe zueinander ist vorzugsweise etwa 1: 1, d. h. 1 zu 0,8 bis 1,2. Die Pigmentdispergatoren der Formel (5) und (29) sind an sich bekannte Verbindungen und lassen sich nach bekannten Verfahren herstellen, z. B. nach EP-A-1 104 789 oder DE-A-3 106 906.

Die Pigmentdispergatoren der Formel (6) sind an sich bekannte Verbindungen und lassen sich nach bekannten Verfahren herstellen, z.B. nach US 5,466,807.

Als Tenside kommen übliche anionische, kationische, nichtionische oder amphotere Substanzen oder Mischungen dieser Mittel in Betracht.

Gegenstand der Erfindung ist auch ein Verfahren zur Herstellung der vorstehend beschriebenen bevorzugten Pigmentzubereitungen, dadurch gekennzeichnet, dass man die Mischung der Verbindungen der Formeln (I), (II) und (III) vor, während und/oder nach einer Feinverteilung, wie z. B. Knetung, Nassmahlung, Trockenmahlung, oder während und/oder nach einer Finishbehandlung mit dem unverlackten, sulfogruppenhaltigen Monoazofarbstoff und ggf. dem Pigmentdispergator der Formel (29) versetzt. Bevorzugt ist die Zugabe während der Feinverteilung.

Dabei können die jeweiligen Komponenten in trockener Form, wie z. B. in Granulat- oder Pulverform, oder in feuchter Form, wie z. B. als Presskuchen, eingesetzt werden.

Eine bevorzugte Form der Feinverteilung ist die Salzknetung mit einem kristallinen anorganischen Salz in Gegenwart eines organischen Lösemittels, wie vorstehend beschrieben.

Die erfindungsgemäßen Pigmentzusammensetzungen lassen sich prinzipiell zum Pigmentieren von allen hochmolekularen organischen Materialien natürlicher oder synthetischer Herkunft einsetzen, beispielsweise von Kunststoffen, Harzen, Lacken, insbesondere Metallic-Lacken, Anstrichfarben, elektrophotographischen Tonem und Entwicklern, Elektretmaterialien, Farbfiltern sowie von Tinten, Druckfarben.

Insbesondere lassen sich mit den erfindungsgemäßen Pigmentzusammensetzungen Farbtöne im roten Bereich erzielen, die beim Einsatz in Farbfiltern gefragt sind. Hier sorgen sie für hohen Kontrast und genügen auch den sonstigen, beim Einsatz in Farbfiltern gestellten Anforderungen, wie hohe Temperaturstabilität oder steile und schmale Absorptionsbanden.

Insbesondere sind die erfindungsgemäßen Pigmentzusammensetzungen auch als Farbmittel in Ink-Jet Tinten auf wässriger und nichtwässriger Basis sowie in solchen Tinten, die nach dem Hot-melt-Verfahren arbeiten, geeignet.

Gegenstand der vorliegenden Erfindung ist daher auch ein hochmolekulares organisches Material, enthaltend eine färberisch wirksame Menge einer erfindungsgemäßen Pigmentzusammensetzung.

Bezogen auf das zu pigmentierende, hochmolekulare organische Material setzt man die erfindungsgemäße Pigmentzubereitung meist in einer Menge von 0,01 bis 30 Gew.-%, vorzugsweise 0,1 bis 15 Gew.%, ein. Bei dem Einsatz in Farbfiltern können auch höhere Mengen eingesetzt werden, wie nachstehend erwähnt.

Insbesondere sind die erfindungsgemäßen Pigmentzusammensetzungen als Farbmittel für Farbfilter sowohl für die additive wie auch für die subtraktive Farberzeugung geeignet, wie beispielsweise in elektro-optischen Systemen wie Fernsehbildschirmen, LCD (liquid crystal displays), charge coupled devices, plasma displays oder electroluminescent displays, die wiederum aktive (twisted nematic) oder passive (supertwisted nematic) ferroelectric displays oder lightemitting diodes sein können, sowie als Farbmittel für elektronische Tinten ("electronic inks" bzw. "e-inks") oder "electronic paper" ("e-paper").

Bei der Herstellung von Farbfiltern, sowohl reflektierender wie durchsichtiger Farbfilter, werden Pigmente in Form einer Paste oder als pigmentierte Photoresists in geeigneten Bindemitteln (Acrylate, Acrylester, Polyimide, Polyvinylalkohole, Epoxide, Polyester, Melamine, Gelantine, Caseine) auf die jeweiligen LCD-Bauteilen (z. B. TFT-LCD = Thin Film Transistor Liquid Crystal Displays oder z.B. ((S) TN-LCD = (Super) Twisted Nematic-LCD) aufgebracht. Neben einer hohen Thermostabilität ist für eine stabile Paste bzw. einen pigmentierten Photoresist auch eine hohe Pigmentreinheit Voraussetzung. Darüber hinaus können die pigmentierten Color Filter auch durch Ink Jet-Druckverfahren oder andere geeignete Druckverfahren aufgebracht werden.

Die Rotfarbtöne der erfindungsgemäßen Pigmentzusammensetzungen sind ganz besonders gut geeignet für den Color Filter Farbset Rot-Grün-Blau (R,G,B). Diese drei Farben liegen als getrennte Farbpunkte nebeneinander vor, und ergeben von hinten durchleuchtet ein Vollfarbbild.

Typische Farbmittel für den blauen Farbpunkt sind Phthalocyaninfarbmittel oder Benzimidazolondioxazinpigmente wie z. B. C.I. Pigment Blue 15:6 und C.I. Pigment Blue 80. Für den grünen Farbpunkt werden typischerweise Phthalocyaninfarbmittel eingesetzt, wie z. B. C.I. Pigment Green 36 und C.I. Pigment Green 7.

Der Rotfarbton wird bevorzugt abgemischt aus P.R. 254 und P.R. 177 oder aus P.R. 254 und P.R. 242.

Bei Bedarf können den jeweiligen Farbpunkten noch weitere Farben zum Nuancieren zugemischt werden. Für den Rot- und Grünfarbton wird bevorzugt mit Gelb abgemischt, zum Beispiel mit C.I. Pigment Yellow 138,139,150,151,180 und 213. Für den Blau Farbton wird bevorzugt mit Violet abgemischt, z. B. mit C.I. Pigment Violet 19 oder 23.

Die Einsatzkonzentration der erfindungsgemäßen Pigmentzusammensetzungen im aufgebrachten Color Filter-Film kann zwischen 5 und 95 Gew.%, bevorzugt zwischen 20 und 80 Gew.-%, ganz besonders bevorzugt zwischen 40 und 60 Gew.-%, liegen, bezogen auf das Gesamtgewicht des Color Filter-Filmes. Gegenstand der Erfindung ist auch ein Colorfilter, enthaltend eine färberisch wirksame Menge der erfindungsgemäßen Pigmentzusammensetzung.

In den folgenden Beispielen bedeuten Prozentangaben Gewichtsprozente und Teile Gewichtsteile, sofern nicht anders angegeben. Molprozente beziehen auf den Gesamt-Nitrilanteil.

Vergleichsbeispiel 1 (analog EP-A-0 181 290, Beispiel 11):

Es wird eine Pigmentmischung gemäß EP-A-0 181 290, Beispiel 11 aus einer Mischung von 1,1 g 4-Cyanobiphenyl (3 Mol-%) und 26,7 g 4-Chlorbenzonitril (97 Mol-%) hergestellt.

Das erhaltene Rotpigment zeichnet sich durch eine mittlere Teilchengröße $d_{50}$ = 85 nm und einen $d_{95}$-Wert von 150 nm mit einer Standardabweichung Sigma (σ) von 31 nm aus.

Länge zu Breiteverhältnis: 3.3:1

Vergleichsbeispiel 2 (analog EP-A-0 181 290, Beispiel 12):

Es wird eine Pigmentmischung gemäß EP-A-0 181 290, Beispiel 12 aus einer Mischung von 1,8 g 4-Cyanobiphenyl (5 Mol-%) und 26,1 g 4-Chlorbenzonitril (95 Mol-%) hergestellt.
Das erhaltene Rotpigment zeichnet sich durch eine mittlere Teilchengröße $d_{50}$= 88 nm und einen $d_{95}$-Wert von 157 nm mit einer Standardabweichung σ von 31 nm aus.
Länge zu Breiteverhältnis: 3.3:1

Vergleichsbeispiel 3 (analog EP-A-0 094 911, Beispiel 15):

Es wird eine Pigmentmischung in Anlehnung an EP-A-0 094 911, Beispiel 15 aus einer Mischung von 21,5 g 4-Cyanobiphenyl (50 Mol-%) und 16,5 g 4-Chlorbenzonitril (50 Mol-%) hergestellt.
Das erhaltene Rotpigment wird anschließend einer Salzknetung unterzogen.
Dafür werden 15 g des trockenen Pigments mit 90 g Natriumchlorid und 22 ml Diethylenglykol bei einer Temperatur von 80 °C für 24 h geknetet. Der Knetteig wird in 0,9 1 5%iger Salzsäure für zwei Stunden gerührt und das Pigment anschließend abfiltriert.
Der Filterkuchen wird erneut für 1 h unter Rühren mit 0,9 l entsalztem Wasser behandelt. Nach der Filtration wird das Pigment mit Wasser salz- und säurefrei gewaschen und im Vakuum getrocknet.
Die erhaltene Pigmentmischung hat eine mittlere Teilchengröße $d_{50}$ = 52 nm und einen $d_{95}$-Wert von 101 nm mit einer Standardabweichung σ von 22 nm.

Vergleichsbeispiel 4:

Es wird eine Salzknetung durchgeführt, bei der reines P.R. 254 mit einer mittleren Teilchengröße von über 200 nm eingesetzt wird, das in Anlehnung an Beispiel 1 der EP-A-0 190 999 hergestellt wurde. Dafür werden 15 g des trockenen Pigments mit 90 g Natriumchlorid und 22 ml Diethylenglykol bei einer Temperatur von 80 °C für 24 h geknetet. Der Knetteig wird in 0,9 1 5%iger Salzsäure für zwei Stunden gerührt und das Pigment anschließend abfiltriert.
Der Filterkuchen wird erneut für 1 h unter Rühren mit 0,9 1 entsalztem Wasser behandelt. Nach der Filtration wird das Pigment mit Wasser salz- und säurefrei gewaschen und im Vakuum getrocknet.
Das erhaltene Pigment hat eine mittlere Teilchengröße $d_{50}$ = 70 nm und einen $d_{95}$-Wert von 114 nm mit einer Standardabweichung σ von 22 nm.
Länge zu Breiteverhältnis: 1.5:1

Beispiel 1:

In einem Kolben werden 1,6 g 4-Cyanobiphenyl (4 Mol-%) und 29,7 g 4-Chlorbenzonitril (96 Mol-%) in Natriumamylat-Lösung in tert.-Amylalkohol (hergestellt aus 9,3 g Natrium und 177 ml tert.-Amylalkohol) eingetragen und auf 100°C erwärmt.
30 g Bemsteinsäuredüsopropylester werden innerhalb zwei Stunden zugegeben. Nach weiteren vier Stunden bei 100°C wird die Pigmentalkalisalz-Suspension auf 80 °C abgekühlt und auf 60 °C heißes Wasser gegeben. Die Pigmentsuspension wird zur Konditionierung anschließend fünf Stunden auf 95 °C erhitzt, abfiltriert, mit Methanol und Wasser gewaschen und im Trockenschrank bei 75 °C getrocknet. Man erhält ein rotes Pigment.
Das erhaltene Rotpigment wird anschließend einer Salzknetung unterzogen. Dafür werden 15 g des trockenen Pigments mit 90 g Natriumchlorid und 22 ml Diethylenglycol bei einer Temperatur von 80°C für 24 h geknetet. Der Knetteig wird in 0,9 1 5%iger Salzsäure für zwei Stunden gerührt und das Pigment anschließend abfiltriert.
Der Filterkuchen wird erneut für 1 h unter Rühren mit 0,9 l entsalztem Wasser behandelt. Nach der Filtration wird das Pigment mit Wasser salz- und säurefrei gewaschen und im Vakuum getrocknet.
Die erhaltene Pigmentzusammensetzung zeichnet sich durch eine mittlere Teilchengröße $d_{50}$ = 28 nm und einen $d_{95}$-Wert von 41 nm mit einer Standardabweichung σ von 7 nm aus.
Länge zu Breiteverhältnis: 1.4:1.

Beispiel 2:

Analog zu Beispiel 1 werden 0,8 g 4-Cyanobiphenyl (2 Mol-%) und 30,3 g 4-Chlorbenzonitril (98 Mol-%) in die Synthese eingesetzt und wie dort beschrieben einer Salzknetung unterzogen und isoliert.
Die erhaltene Pigmentzusammensetzung hat eine mittlere Teilchengröße $d_{50}$= 30 nm und einen $d_{95}$-Wert von 45 nm mit einer Standardabweichung σ von 8 nm.
Länge zu Breiteverhältnis: 1.3:1

Beispiel 3:

Analog zu Beispiel 1 werden 4,0 g 4-Cyanobiphenyl (10 Mol-%) und 27,9 g 4-Chlorbenzonitril (90 Mol-%) in die Synthese eingesetzt und wie dort beschrieben einer Salzknetung unterzogen und isoliert.

Die erhaltene Pigmentzusammensetzung hat eine mittlere Teilchengröße $d_{50}$= 28 nm und einen $d_{95}$-Wert von 42 nm mit einer Standardabweichung σ von 8 nm.

Länge zu Breiteverhältnis: 1.3:1

Beispiel 4:

Eine Pigmentzusammensetzung wird analog zu Beispiel 1 unter Einsatz von 1,6 g 4-Cyanobiphenyl (4 Mol-%) und 29,7 g 4-Chlorbenzonitril (96 Mol-%) hergestellt.

Das rote Pigment wird anschließend einer Salzknetung unterzogen. Dafür werden 15 g des trockenen Pigments und 1,5 g eines Pigmentdispergators (8), hergestellt in Anlehnung an EP-A-1 104 789, Beispiel 10a, mit 90 g Natriumchlorid und 22 ml Diethylenglykol bei einer Temperatur von 80°C für 24 h geknetet. Der Knetteig wird in 0,9 1 5%iger Salzsäure für zwei Stunden gerührt und das Pigment anschließend abfiltriert.

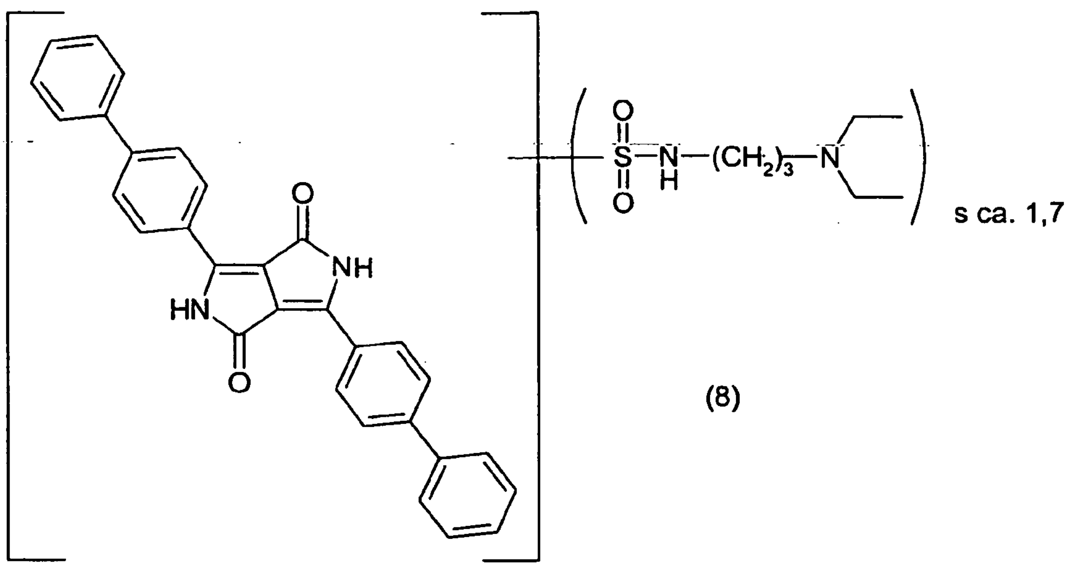

(8)

Der Filterkuchen wird erneut für 1 h unter Rühren mit 0,9 1 entsalztem Wasser behandelt. Nach der Filtration wird das Pigment mit Wasser salz- und säurefrei gewaschen und im Vakuum getrocknet.

Die erhaltene rote Pigmentzusammensetzung hat eine mittlere Teilchengröße $d_{50}$ = 29 nm und einen $d_{95}$-Wert von 45 nm mit einer Standardabweichung σ von 10 nm.

Länge zu Breiteverhältnis: 1.5:1

Beispiel 5:

Analog zu Beispiel 4 werden 1,5 g eines Synergisten (9) in die Knetung eingesetzt, der in Anlehnung an das Beispiel 1a der EP-A-1 362 081 synthetisiert wurde. Man erhält eine rote Pigmentzusammensetzung mit einer mittleren Teilchengröße $d_{50}$ = 32 nm und einem $d_{95}$-Wert von 47 nm mit einer Standardabweichung σ von 11 nm.

Länge zu Breiteverhältnis: 1.3:1

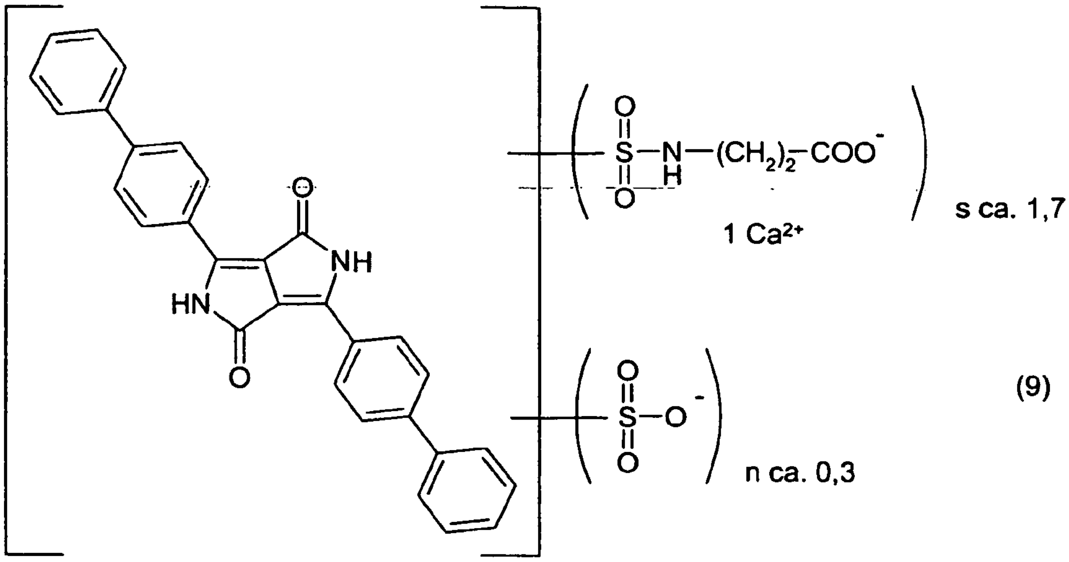

(9)

Beispiel 6:

Analog zu Beispiel 4 werden 1,5 g eines Synergisten (10) in die Knetung eingesetzt, der in Anlehnung an das Beispiel 1a der EP-A-1 362 081 synthetisiert wurde. Man erhält eine rote Pigmentzusammensetzung, die sich durch eine mittlere Teilchengröße $d_{50}$ = 28 nm und einen $d_{95}$-Wert von 42 nm mit einer Standardabweichung $\sigma$ von 9 nm auszeichnet.

Länge zu Breiteverhältnis: 1.5:1

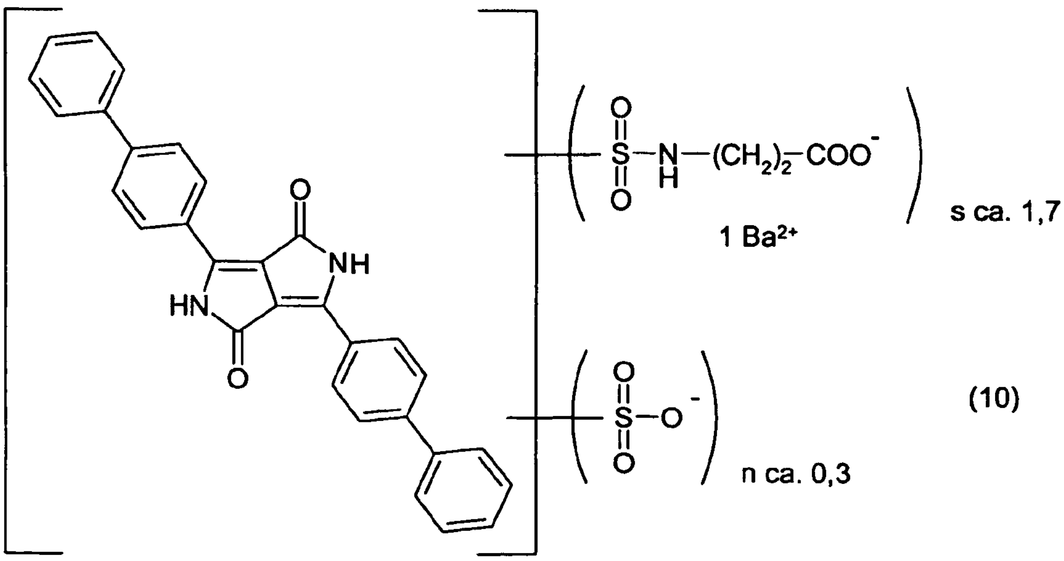

(10)

Beispiel 7:

Analog zu Beispiel 4 werden 1,5 g eines Synergisten (11) in die Knetung eingesetzt, der in Anlehnung an das

Beispiel 1a der EP-A-1 362 081 synthetisiert wurde. Man erhält eine rote Pigmentzusammensetzung mit einer mittleren Teilchengröße $d_{50}$ = 32 nm und einem $d_{95}$-Wert von 47 nm mit einer Standardabweichung $\sigma$ von 10 nm.

Länge zu Breiteverhältnis: 1.3:1

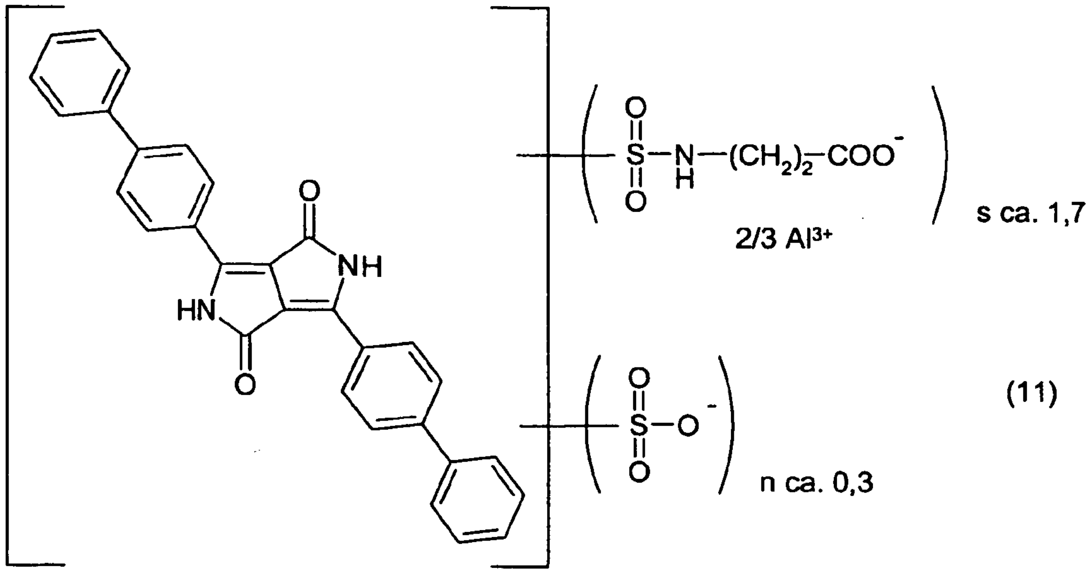

(11)

Beispiel 8:

Analog zu Beispiel 4 werden 1,5 g eines Synergisten (12) in die Knetung eingesetzt. Man erhält eine rote Pigmentzusammensetzung mit einer mittleren Teilchengröße $d_{50}$ = 27 nm und einem $d_{95}$-Wert von 42 nm mit einer Standardabweichung $\sigma$ von 8 nm.

Länge zu Breiteverhältnis: 1.4:1

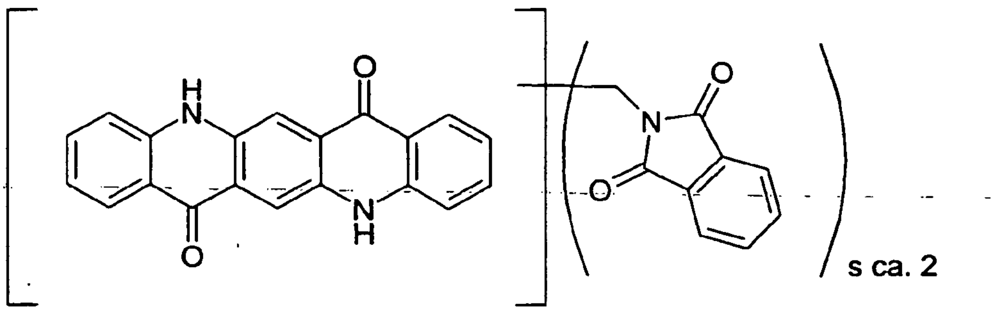

(12)

Beispiel 9:

Analog zu Beispiel 4 werden 1,5 g eines Synergisten (13) in die Knetung eingesetzt. Man erhält eine rote Pigmentzusammensetzung mit einer mittleren Teilchengröße $d_{50}$ = 29 nm und einem $d_{95}$-Wert von 41 nm mit einer Standardabweichung $\sigma$ von 8 nm.

Länge zu Breiteverhältnis: 1.3:1

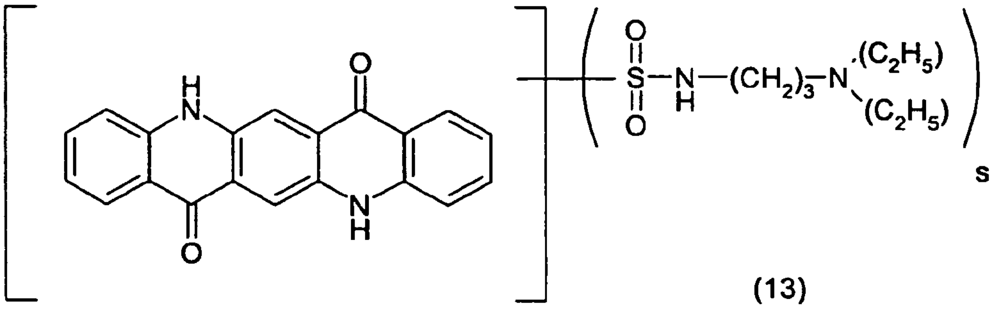

s ca. 1,9

(13)

Beispiel 10:

Analog zu Beispiel 4 werden 1,5 g eines Synergisten (14)

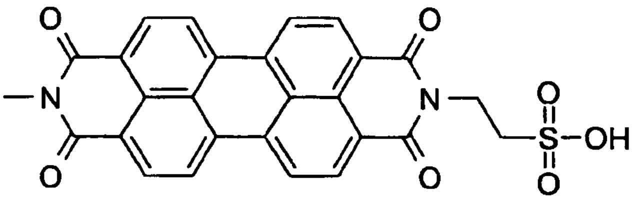

(14)

in die Knetung eingesetzt, der analog zum Beispiel 3 der EP-A-0 486 531 hergestellt wurde. Man erhält eine rote Pigmentzusammensetzung, die sich durch eine mittlere Teilchengröße $d_{50}$ = 33 nm und einen $d_{95}$-Wert von 50 nm mit einer Standardabweichung $\sigma$ von 14 nm auszeichnet.

Länge zu Breiteverhältnis: 1.5:1

Tabelle 1: Korngrößenverteilung und Standardabweichung

| Probe | $d_{50}$ | $d_{95}$ | Standardabweichung $\sigma$ |
|---|---|---|---|
| | [nm] | [nm] | [nm] |
| Beispiel 1 | 28 | 41 | 7 |
| Beispiel 2 | 30 | 45 | 8 |
| Beispiel 3 | 28 | 42 | 8 |
| Beispiel 4 | 29 | 45 | 10 |
| Beispiel 5 | 32 | 47 | 11 |
| Beispiel 6 | 28 | 42 | 9 |
| Beispiel 7 | 32 | 47 | 10 |
| Beispiel 8 | 27 | 42 | 8 |
| Beispiel 9 | 29 | 41 | 8 |
| Beispiel 10 | 33 | 50 | 14 |
| Vergleichsbeispiel 1 | 85 | 150 | 31 |
| Vergleichsbeispiel 2 | 88 | 157 | 31 |
| Vergleichsbeispiel 3 | 52 | 101 | 22 |

(fortgesetzt)

| Probe | $d_{50}$ | $d_{95}$ | Standardabweichung σ |
|---|---|---|---|
| | [nm] | [nm] | [nm] |
| Vergleichsbeispiel 4 | 70 | 114 | 22 |

Anwendung in Colorfiltem:

7,2 g Joncryl® 611 (Styrol-Acrylatharz, Johnson Polymers) werden für eine Stunde in 13,4 g PGMEA gerührt und unter Rühren mit weiteren 42 g PGMEA, 7,2 g Pigment bzw. Pigmentzusammensetzung, 1,8 g Solsperse® 24000 und 0,36 g Solsperse 22000 (Avecia) versetzt. Nach Zugabe von 122 g Zirkonoxid-Perlen (0,5-0,7 mm) wird für zwei Stunden im Paint Shaker dispergiert. Die Pigmentdispersion wird mit Hilfe eines Spincoaters (POLOS Wafer Spinner) auf Glasplatten (SCHOTT, Laser-geschnitten, 10x10 cm) aufgetragen und der Kontrastwert (Goniometer DMS 803, Spektrograph CCD-SPECT2) gemessen.

| Probe | Kontrastwert |
|---|---|
| Beispiel 1 | 1708 |
| Beispiel 2 | 1109 |
| Beispiel 3 | 1225 |
| Beispiel 4 | 2210 |
| Beispiel 5 | 2315 |
| Beispiel 6 | 2163 |
| Beispiel 7 | 1742 |
| Beispiel 8 | 1750 |
| Beispiel 9 | 2350 |
| Beispiel 10 | 1822 |
| Vergleichsbeispiel 1 | 292 |
| Vergleichsbeispiel 2 | 273 |
| Vergleichbeispiel 3 | 610 |
| Vergleichsbeispiel 4 | 853 |

Die Pigmentzusammensetzungen aus Beispielen 1 bis 10 sind aufgrund ihres hohen Kontrastwertes für Colorfilteranwendungen geeignet.

Beim Erhitzen der Platten auf 230 °C zeigen die Pigmente keine Tendenz zur Rekristallisation, der Kontrastwert verringert sich um höchstens 10 %.

Anwendungen in Lack:

Zur Ermittlung der coloristischen Eigenschaften der Pigmente in Lackanwendungen wurden die erhaltenen Pigmente in einem transparenten Alkyd-Melamin-Einbrennlacksystem vollständig dispergiert.

Zur Bestimmung der Farbstärke wurde ein Aufhellungslack hergestellt, indem 6,0 g des Alkyd-Melamin-Volltonlacks mit 20,0 g eines 30 %igen Weißlacks vermischt wurden.

Der erhaltene Aufhellungslack wurde zusammen mit der zu vergleichenden Probe nebeneinander auf eine weiße Pappkarte aufgezogen und nach 30 min Lufttrocknung für 30 min bei 140 °C eingebrannt. Die Farbstärke und ihre Messung ist definiert nach DIN EN ISO 787-26.

Die Farbstärken, Chroma (Farbreinheit) und Transparenz der in den vorstehenden Beispielen hergestellten Pigmente sind in der nachfolgenden Tabelle angegeben. Als Standard für die Farbstärke (100 %), der Buntheit ΔC (Reinheit) und des Farbtons ΔH wurde das Pigment aus Vergleichsbeispiel 4 herangezogen.

| | Farbstärke | Farbton (ΔH) | Reinheit (ΔC) |
|---|---|---|---|
| Vergleichsbeispiel 4 | - | - | - |
| Beispiel 2 | 100% | 0.64 | 0.43 |
| Beispiel 1 | 95% | 0.01 | -0.56 |
| Beispiel 3 | 97% | -0.03 | -0.98 |
| Vergleichsbeispiel 3 | 83% | -8.54 | -13.56 |

Bei einer äquimolaren Mischung der beiden Nitrile (Vergleichsbeispiel 3) sieht man eine starke Abweichung des Farbtons im Vergleich zu reinem P.R. 254 (Vergleichsbeispiel 4) und eine starke Abnahme der Reinheit.

Beispiel A: Dispergator (VIII)

a) Diazo (Mischung 1)

89,6 Teile 2-Amino-4-chlor-5-methylbenzolsulfonsäure werden in 400 Teilen Wasser und 41 Teilen Natronlauge (w = 33 %) gelöst. Es wird mit 162 Teilen Salzsäure (w = 31 %) und 73 Teilen Natriumnitritlösung (w = 40 %) bei 10°C diazotiert. Anschließend wird der durch Zugabe von 50 Teilen Natriumacetat ein pH von 3-4 eingestellt.

b) Kuppler (Mischung 2)

In 1600 Teilen Wasser und 98 Teilen Natronlauge 33 %ig werden 79 Teile BONS (3-Hydroxy-naphthalin-2-carbonsäure) gelöst. Durch Zugabe von Eis wird auf 10°C abgekühlt.

c) Kupplung

Mischung 1 wird in 90 Minuten bei 15°C zu Mischung 2 gegeben. Es wird erst eine Stunde bei 30 °C, dann eine Stunde bei 60°C gerührt. Die entstehende tiefrote Suspension wird filtriert, gewaschen und bei 80 °C im Umlufttrockenschrank getrocknet. Man erhält 160 Teile des Dispergators (VIII).

Beispiele B bis U:

Analog Beispiel A werden die Dispergatoren (IX) bis (XXVIII) hergestellt.

Beispiel V: Herstellung des Basispigments (Mischung aus Bis(4-Chlor-Phenyl)-Diketopyrrolopyrrol (I), (4-Chtor-Pheny))-(X-Biphenyl)-Diketopyrrotopyrrol (II) und Bis(X-Biphenyl)-Diketopyrrolopyrrol (III)):

In einem Kolben werden 1,6 g 4-Cyanobiphenyl (4 Mol-%) und 29,7 g 4-Chlorbenzonitril (96 Mol-%) in Natriumamylat-Lösung in tert.-Amylalkohol (hergestellt aus 9,3 g Natrium und 177 ml tert.-Amylalkohol) eingetragen und auf 100°C erwärmt.

30 g Bernsteinsäurediisopropylester werden innerhalb zwei Stunden zugegeben.

Nach weiteren vier Stunden bei 100°C wird die Pigmentalkalisalz-Suspension auf 80 °C abgekühlt und auf 60 °C heißes Wasser gegeben. Die Pigmentsuspension wird zur Konditionierung anschließend fünf Stunden auf 95 °C erhitzt, abfiltriert, mit Methanol und Wasser gewaschen und im Trockenschrank bei 75°C getrocknet. Man erhält ein rotes Pigment.

Das erhaltene Rotpigment wird einer Salzknetung unterzogen. Dafür werden 15 g des trockenen Pigments mit 90 g Natriumchlorid und 22 ml Diethylenglycol bei einer Temperatur von 80 °C für 24 h geknetet. Der Knetteig wird in 0,9 l 5 %iger Salzsäure für zwei Stunden gerührt und das Pigment anschließend abfiltriert.

Der Filterkuchen wird erneut für 1 h unter Rühren mit 0,9 l entsalztes Wasser behandelt. Nach der Filtration wird das Pigment mit Wasser salz- und säurefrei gewaschen und im Vakuum getrocknet.

Die erhaltene Pigmentzusammensetzung zeichnet sich durch eine mittlere Teilchengröße $d_{50}$ = 28 nm und einen $d_{95}$-Wert von 41 nm mit einer Standardabweichung σ von 7 nm aus.

Länge zu Breiteverhältnis: 1.4:1.

Beispiel A1:

Eine Pigmentzusammensetzung wird analog zu Beispiel V unter Einsatz von 1,6 g 4-Cyanobiphenyl (4 Mol-%) und 29,7 g 4-Chlorbenzonitril (96 Mol-%) hergestellt.

Das rote Pigment wird anschließend einer Salzknetung unterzogen. Dafür werden 14 g des trockenen Pigments, 1,4 g des Pigmentdispergators (31), hergestellt in Anlehnung an EP-A-1 104 789, Beispiel 10a, und 1,4 g des Dispergators (VIII) mit

90 g Natriumchlorid und 22 ml Diethylenglykol bei einer Temperatur von 80°C für 24 h geknetet. Der Knetteig wird in 0,9 15 %iger Salzsäure für zwei Stunden gerührt und das Pigment anschließend abfiltriert.

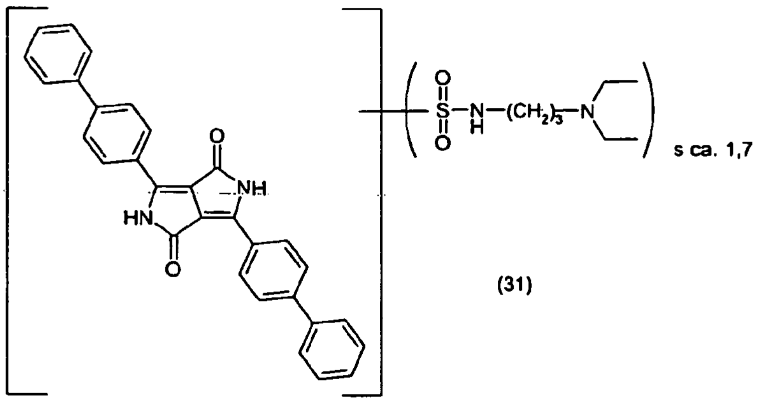

(31)

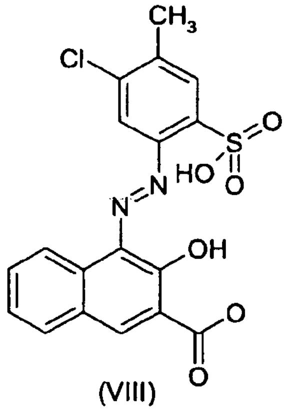

(VIII)

Der Filterkuchen wird erneut für 1 h unter Rühren mit 0,9 l entsalztem Wasser behandelt. Nach der Filtration wird das Pigment mit Wasser salz- und säurefrei gewaschen und im Vakuum getrocknet.

Die erhaltene rote Pigmentzusammensetzung hat eine mittlere Teilchengröße $d_{50}$ = 29 nm und einen $d_{95}$-Wert von 45 nm mit einer Standardabweichung $\sigma$ von 10 nm.

Länge zu Breiteverhältnis: 1.5:1

Beispiel A2:

Analog zu Beispiel A1 werden 1,4 g des Pigmentdispergators (31) und 1,4 g des Dispergators (IX) in die Knetung eingesetzt. Man erhält eine rote Pigmentzusammensetzung, die sich durch eine mittlere Teilchengröße $d_{50}$ = 31 nm und einen $d_{95}$-Wert von 49 nm mit einer Standardabweichung $\sigma$ von 10 nm auszeichnet.

Länge zu Breiteverhältnis: 1.4:1

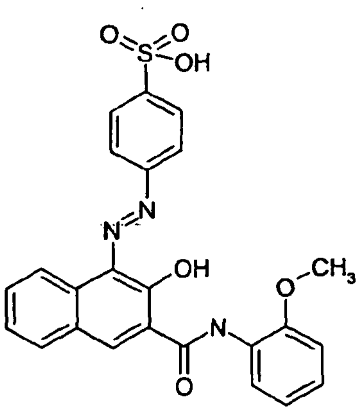

(IX)

Beispiel A3:

Analog zu Beispiel A1 werden 1,4 g des Pigmentdispergators (31) und 1,4 g des Dispergators (XIV) in die Knetung eingesetzt. Man erhält eine rote Pigmentzusammensetzung, die sich durch eine mittlere Teilchengröße $d_{50}$ =

33 nm und einen $d_{95}$-Wert von 53 nm mit einer Standardabweichung σ von 10 nm auszeichnet.

Länge zu Breiteverhältnis: 1.5:1

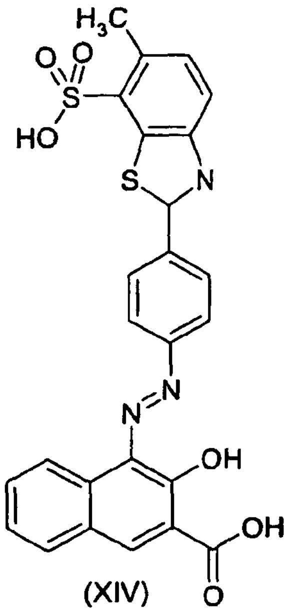

(XIV)

Beispiel A4:

Analog zu Beispiel A1 werden 1,4 g des Pigmentdispergators (32), hergestellt in Anlehnung an EP-A-3 106 906, Beispiel 1, und 1,9 g des Dispergators (IX) in die Knetung eingesetzt. Man erhält eine rote Pigmentzusammensetzung, die sich durch eine mittlere Teilchengröße $d_{50}$ = 34 nm und einen $d_{95}$-Wert von 50 nm mit einer Standardabweichung σ von 10 nm auszeichnet.

Länge zu Breiteverhältnis: 1.4:1

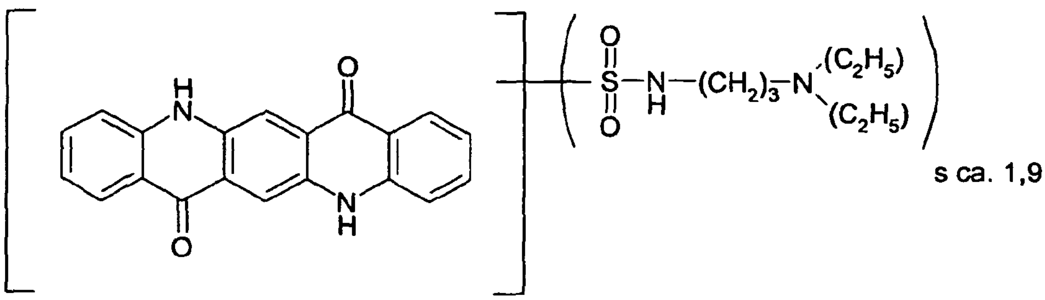

(32)

Beispiel A5:

Analog zu Beispiel A1 werden 0,7 g des Pigmentdispergators (32) und 0,42 g des Dispergators (VIII) in die Knetung eingesetzt. Man erhält eine rote Pigmentzusammensetzung, die sich durch eine mittlere Teilchengröße $d_{50}$= 27 nm und einen $d_{95}$-Wert von 42 nm mit einer Standardabweichung σ von 10 nm auszeichnet.

Länge zu Breiteverhältnis: 1.5:1

Beispiel A6:

Es wird wie in Beispiel A1 verfahren, wobei jedoch die 1,4 g des Dispergators (IX) als alleiniger Dispergator in die Knetung eingesetzt werden. Man erhält eine rote Pigmentzusammensetzung, die sich durch eine mittlere Teilchengröße $d_{50}$ = 35 nm und einen $d_{95}$-Wert von 50 nm mit einer Standardabweichung σ von 12 nm auszeichnet.
Länge zu Breiteverhältnis: 1.5:1

Beispiel A7:

Es wird wie in Beispiel A1 verfahren, wobei jedoch die 1,4 g des Dispergators (VIII) als alleiniger Dispergator in die Knetung eingesetzt werden. Man erhält eine rote Pigmentzusammensetzung, die sich durch eine mittlere Teilchengröße $d_{50}$ = 40 nm und einen $d_{95}$-Wert von 63 nm mit einer StandardaDweicnung σ von 12 nm auszeichnet.
Länge zu Breiteverhältnis: 1.5:1

Beispiel A8:

Es wird wie in Beispiel A1 verfahren, wobei jedoch die 2,1 g des Dispergators (IX) als alleiniger Dispergator in die Knetung eingesetzt werden. Man erhält eine rote Pigmentzusammensetzung, die sich durch eine mittlere Teilchengröße $d_{50}$= 38 nm und einen $d_{95}$-Wert von 58 nm mit einer Standardabweichung σ von 11 nm auszeichnet.
Länge zu Breiteverhältnis: 1.5:1

Beispiel A9:

Es wird wie in Beispiel A1 verfahren, wobei jedoch die 1,4 g des Dispergators (XVI) als alleiniger Dispergator in die Knetung eingesetzt werden. Man erhält eine rote Pigmentzusammensetzung, die sich durch eine mittlere Teilchengröße $d_{50}$ = 45 nm und einen $d_{95}$-Wert von 63 nm mit einer Standardabweichung σ von 13 nm auszeichnet.
Länge zu Breiteverhältnis: 1.5:1

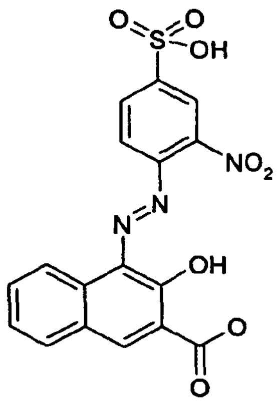

(XVI)

Beispiel A10:

Es wird wie in Beispiel A1 verfahren, wobei jedoch die 1,4 g des Dispergators (XXIV) als alleiniger Dispergator in die Knetung eingesetzt werden. Man erhält eine rote Pigmentzusammensetzung, die sich durch eine mittlere Teilchengröße $d_{50}$ = 32 nm und einen $d_{95}$-Wert von 56 nm mit einer Standardabweichung σ von 10 nm auszeichnet.
Länge zu Breiteverhältnis: 1.5:1

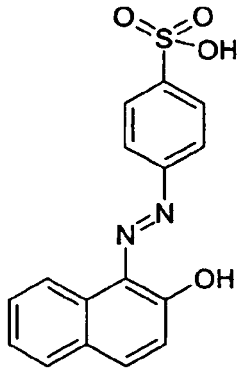

(XXIV)

Beispiel A11:

Es wird wie in Beispiel A1 verfahren, wobei jedoch die 1,4 g des Dispergators (XXII) als alleiniger Dispergator in die Knetung eingesetzt werden. Man erhält eine rote Pigmentzusammensetzung, die sich durch eine mittlere Teilchengröße $d_{50}$ = 36 nm und einen $d_{95}$-Wert von 63 nm mit einer Standardabweichung σ von 10 nm auszeichnet.
Länge zu Breiteverhältnis: 1.5:1

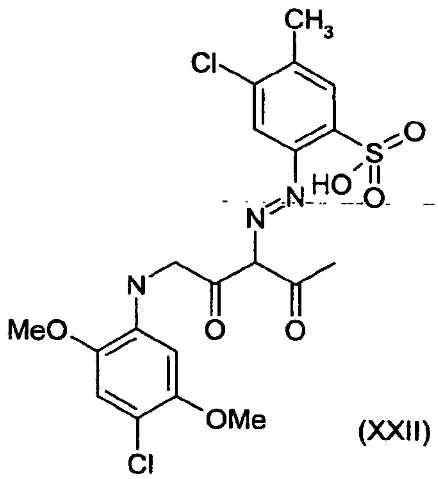

(XXII)

Beispiel A12:

Es wird wie in Beispiel A1 verfahren, wobei jedoch die 1,4 g des Dispergators (XXVII) als alleiniger Dispergator in die Knetung eingesetzt werden. Man erhält eine rote Pigmentzusammensetzung, die sich durch eine mittlere Teilchengröße $d_{50}$ = 31 nm und einen $d_{95}$-Wert von 52 nm mit einer Standardabweichung σ von 13 nm auszeichnet.
Länge zu Breiteverhältnis: 1.5:1

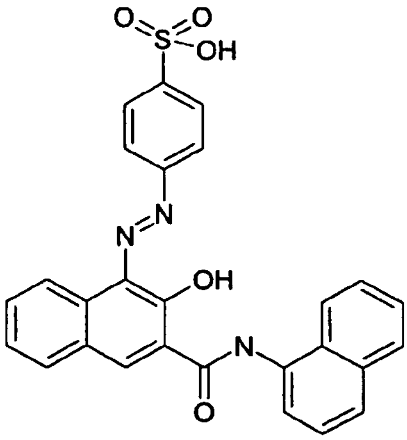

(XXVII)

Beispiel A13: Nachbehandlung nach Knetung

Es wird ein Rotpigment wie in Beispiel V hergestellt, wobei nach Ausrühren des Knetkuchens mit 5 %iger Salzsäure erneut mit 0.9 l entsalztem Wasser angeteigt und mit 1.4 g des Pigmentdispergators (31) und 1,4 g des Dispergators (IX) in wässriger Suspension für 1 h bei 50 °C verrührt wird. Nach Abkühlen wird filtriert und mit etwa 2 l entsalztem Wasser nachgewaschen. Es wird im Vakuum getrocknet und anschließend zu Pulver vermahlen. Man erhält eine rote Pigmentzusammensetzung, die sich durch eine mittlere Teilchengröße $d_{50}$ = 35 nm und einen $d_{95}$-Wert von 53 nm mit einer Standardabweichung σ von 10 nm auszeichnet.

Länge zu Breiteverhältnis: 1.4:1

Anwendung in Colorfiltern:

7,6 g Pigment bzw. Pigmentzusammensetzung werden mit 1,8 g Solsperse 24000 (Avecia) und 42 g PGMEA versetzt. Nach Zugabe von 122 g Zirkonoxid-Perlen (0,5-0,7 mm) wird für zwei Stunden im Paint Shaker dispergiert. Die so erhaltene Millbase wird mit einem Kegel-Platte Viskosimeter Haake RS75 bei 20 °C vermessen (DIN 53019, Bestimmung der Viskosität und der Thixotrophie). Zu der erhaltenen Millbase wird eine Mischung aus 7,2g Joncryl® 611 (Styrol-Acrylatharz, Johnson Polymers) in 13,4 g PGMEA gegeben und erneut für 10 Minuten im Paintshaker dispergiert. Die Pigmentdispersion wird mit Hilfe eines Spincoaters (POLOS Wafer Spinner) auf Glasplatten (SCHOTT, Laser-geschnitten, 10 x 10 cm) aufgetragen und der Kontrastwert (Goniometer DMS 803, Spektrograph CCD-SPECT2) gemessen.

Zur Bestimmung der Hitzestabilität wird die Glasplatte anschließend für 1 h bei 250 °C erhitzt. Der Kontrastwert wird erneut vermessen und der Verlust im Vergleich zur nicht temperaturbehandelten Glasplatte in Prozent angegeben.

| Probe | Viskosität/ mPas | Thixotropie/ Pas | Kontrastwert | Verlust beim Erhitzen (250 °C) |
|---|---|---|---|---|
| Beispiel V | 658 | 23600 | 1658 | -31% |
| Beispiel A1 | 139 | 1043 | 2549 | -5% |
| Beispiel A2 | 57 | 18 | 2499 | -3% |
| Beispiel A3 | 165 | 1948 | 2308 | -4% |
| Beispiel A4 | 34 | 13 | 2734 | -6% |
| Beispiel A5 | 41 | 3 | 2457 | -8% |
| Beispiel A6 | 82 | 80 | 2528 | -27% |
| Beispiel A7 | 109 | 801 | 2352 | -25% |
| Beispiel A8 | 68 | 281 | 2533 | -26% |
| Beispiel A9 | 85 | 371 | 2431 | -26% |

(fortgesetzt)

| Probe | Viskosität/ mPas | Thixotropie/ Pas | Kontrastwert | Verlust beim Erhitzen (250 °C) |
|---|---|---|---|---|
| Beispiel A10 | 67 | 57 | 2315 | -25% |
| Beispiel A11 | 145 | 302 | 2167 | -26% |
| Beispiel A12 | 46 | 65 | 2337 | -30% |
| Beispiel A13 | 20 | 7 | 2653 | -9% |

Die Pigmentzusammensetzungen aus Beispielen A1 bis A13 sind aufgrund ihres hohen Kontrastwertes und der niedrigen Viskosität und Thixotropie der Millbase für Colorfilteranwendungen sehr gut geeignet.

Darüber hinaus besitzen sie zum Teil eine sehr hohe Hitzestabilität.

**Patentansprüche**

**1.** Pigmentzusammensetzung aus Verbindungen der Formel (I), (II) und (III), **gekennzeichnet durch** eine mittlere Teilchengröße $d_{50}$ von 10 bis 60 nm, wobei weniger als 5 Volumen-% der Teilchen größer als 70 nm sind,

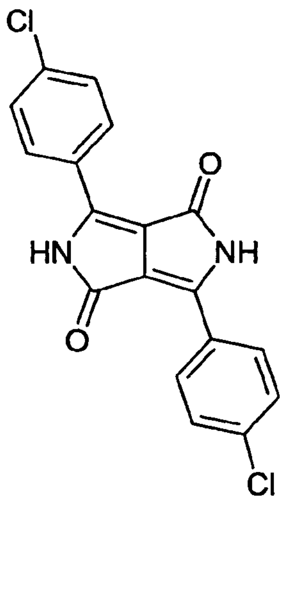

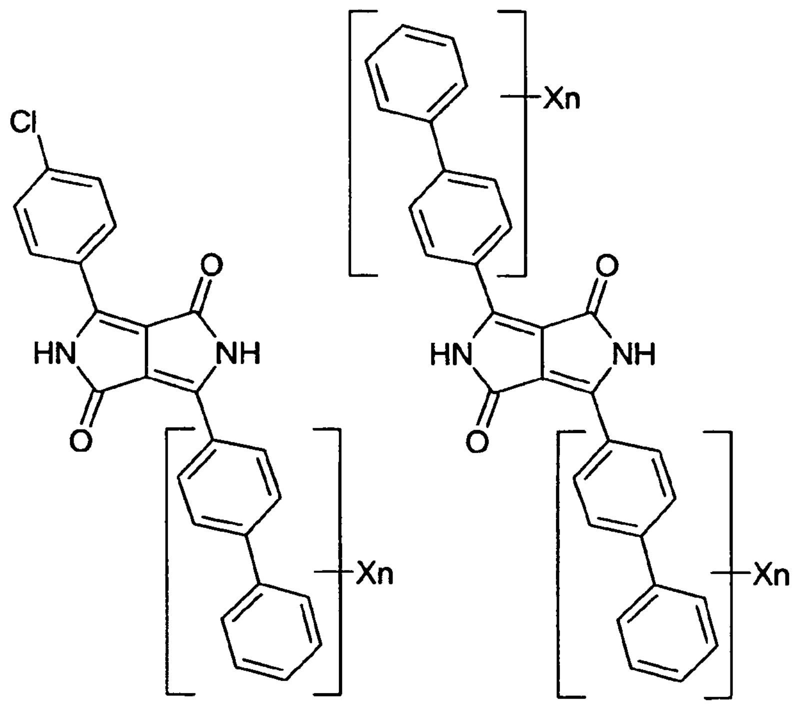

(I) (II) (III)

erhältlich **durch** Umsetzung von 1 Mol eines Bernsteinsäurediesters mit 2 Mol einer Mischung von Nitrilen A-CN und B-CN, wobei im Nitrilgemisch A-CN und B-CN im Molverhältnis 99,5 zu 0,5 bis 85,0 zu 15 zueinander stehen, und wobei A-CN 4-Chlorbenzonitril bedeutet und B-CN ein Nitril der Formel (IV) ist,

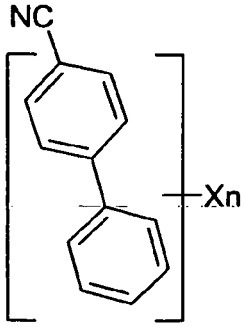

(IV)

worin

n eine Zahl von 0 bis 4 darstellt; und
X OH, F, Cl, Br, CN, $CF_3$, Nitro, $C_1$-$C_8$-Alkyl, $C_5$-$C_7$-Cycloalkyl, $C_2$-$C_8$-Alkenyl, $C_1$-$C_8$-Alkoxy, Phenyl, Benzyl ist.

**2.** Pigmentzusammensetzung aus Pigmenten der Formel (I), (II) und (III), **gekennzeichnet durch** eine mittlere Teilchengröße $d_{50}$ von 10 bis 60 nm, wobei weniger als 5 Volumen-% der Teilchen größer als 70 nm sind,

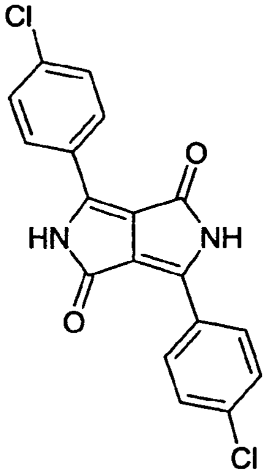

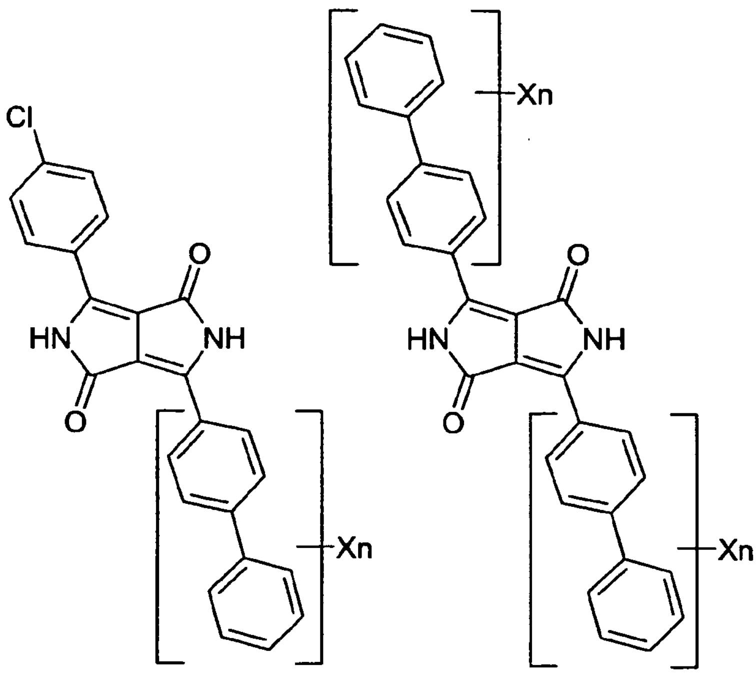

(I) (II) (III)

wobei

n eine Zahl von 0 bis 4 darstellt; und
X OH, F, Cl, Br, CN, $CF_3$, Nitro, $C_1$-$C_8$-Alkyl, $C_5$-$C_7$-Cycloalkyl, $C_2$-$C_8$-Alkenyl, $C_1$-$C_8$-Alkoxy, Phenyl, Benzyl ist;

und enthaltend mindestens einen Dispergator aus der Gruppe der unverlackten, sulfogruppenhaltigen Monoazofarbstoffe.

3. Pigmentzusammensetzung nach Anspruch 1 oder 2, **dadurch gekennzeichnet, dass** n Null ist.

4. Pigmentzusammensetzung nach einem oder mehreren der Ansprüche 1 bis 3, **dadurch gekennzeichnet, dass** das Länge- zu Breiteverhältnis der Pigmentteilchen zwischen 2:1 und 1:1 liegt.

5. Pigmentzusammensetzung nach einem oder mehreren der Ansprüche 1 bis 4, enthaltend ein oder mehrere Hilfsmittel aus der Gruppe der Tenside, Dispergiermittel, Füllstoffe, Stellmittel, Harze, Wachse, Entschäumer, Antistaubmittel, Extender, Antistatika, Konservierungsmittel, Trocknungsverzögerungsmittel, Netzmittel, Antioxidantien, UV-Absorber und Lichtstabilisatoren.

6. Pigmentzusammensetzung nach einem oder mehreren der Ansprüche 2 bis 5, **dadurch gekennzeichnet, dass** der unverlackte, sulfogruppenhaltige Monoazofarbstoff eine Verbindung der Formeln (IV), (V), (VI) oder (VII) ist

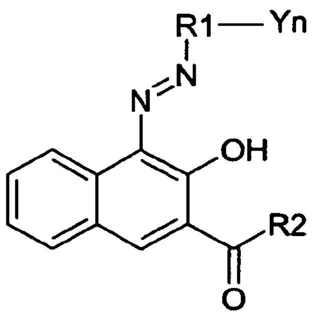
(IV)

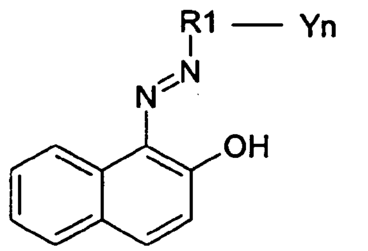
(V)

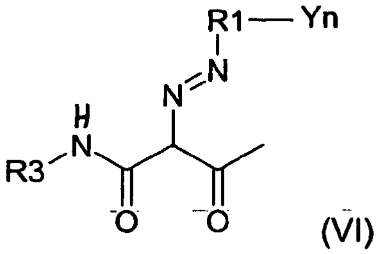
(VI)

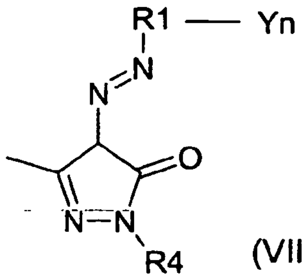
(VII)

worin

R1 ein aromatischer Rest mit 1, 2 oder 3 aromatischen Ringen, wobei die Ringe kondensiert vorliegen oder durch eine Bindung verknüpft sein können, oder ein heterocyclischer Rest mit 1, 2 oder 3 Ringen, enthaltend 1, 2, 3 oder 4 Heteroatome aus der Gruppe O N und S; oder eine Kombination davon;
wobei die genannten Aromaten- und Heteroaromaten-Reste durch 1, 2, 3 oder 4 Substituenten aus der Gruppe OH, CN, F, Cl, Br, $NO_2$, $CF_3$, $C_1$-$C_6$-Alkoxy, S-$C_1$-$C_6$-Alkyl, $NHCONH_2$, $NHC(NH)NH_2$, NHCO-$C_1$-$C_6$-Alkyl. $C_1$-$C_6$-Alkyl. COOR5, CONR5R6, NR5R6, $SO_3$R5, $SO_2$-NR5R6 oder $COO^-E^+$ substituiert sein können, wobei R5 und R6 gleich oder verschieden sind und Wasserstoff, Phenyl oder $C_1$-$C_6$-Alkyl und $E^+$ Wasserstoff, Lithium, Natrium, Kalium, Rubidium, Cäsium oder ein unsubstituiertes Ammoniumion bedeuten;
Y $SO_3^-E^+$ oder Z-$SO_3^-$ $E^+$, wobei Z $C_1$- $C_{10}$-Alkylen oder Phenylen bedeutet;
n die Zahl von 1, 2 oder 3;
R2 -$OR^8$ oder -$NHR^8$ bedeutet,
wobei $R^8$ H, $C_1$-$C_6$-Alkyl, Benzyl, ein aromatischer Rest mit 1, 2 oder 3 aromatischen Ringen, wobei die Ringe kondensiert vorliegen oder durch eine Bindung verknüpft sein können, oder ein heterocyclischer Rest mit 1, 2 oder 3 Ringen, enthaltend 1, 2, 3 oder 4 Heteroatome aus der Gruppe O, N und S; oder eine Kombination davon;

wobei die genannten Aromaten- und Heteroaromaten-Reste jeweils durch 1, 2, 3 oder 4 Substituenten aus der Gruppe OH, $C_1$-$C_5$-Alkoxy, S-$C_1$-$C_6$-Alkyl, Halogen, wie F, Cl, Br, $NHCONH_2$, $NHC(NH)NH_2$, NHCO- $C_1$-$C_6$-Alkyl, $C_1$-$C_6$-Alkyl, Nitro, COOR5, CONR5R6, $SO_3R5$, $SO_2$-NR5R6, $NR^9R^{10}$, $SO_3^-E^+$ oder $COO^-E^+$ substituiert sein können, wobei R5 und R6 gleich oder verschieden sind und Wasserstoff, Phenyl oder $C_1$-$C_6$-Alkyl bedeuten; $R^9$ und $R^{10}$ gleich oder verschieden sind und Wasserstoff, Phenyl oder $C_1$-$C_6$-Alkyl bedeuten;
R3 und R4 jeweils ein aromatischer Rest mit 1, 2 oder 3 aromatischen Ringen, wobei die Ringe kondensiert vorliegen oder durch eine Bindung verknüpft sein können, oder ein heterocyclischer Rest mit 1, 2 oder 3 Ringen, enthaltend 1, 2, 3 oder 4 Heteroatome aus der Gruppe O, N und S; oder eine Kombination davon;
wobei die genannten Aromaten- und Heteroaromaten-Reste jeweils durch 1, 2, 3 oder 4 Substituenten aus der Gruppe OH, $C_1$-$C_6$-Alkoxy, S-$C_1$-$C_6$-Alkyl. Halogen, wie F, Cl, Br, $NHCONH_2$, $NHC(NH)NH_2$, NHCO- $C_1$-$C_6$-Alkyl, $C_1$-$C_6$-Alkyl, Nitro, COOR5, CONR5R6, $SO_3R5$, $SO_2$-NR5R6, $NR^9R^{10}$, $SO_3^-E^+$ oder $COO^-E^+$ substituiert sein können, wobei R5 und R6 gleich oder verschieden sind und Wasserstoff, Phenyl oder $C_1$-$C_6$-Alkyl bedeuten; $R^9$ und $R^{10}$ gleich oder verschieden sind und Wasserstoff, Phenyl oder $C_1$-$C_6$-Alkyl bedeuten.

7. Pigmentzusammensetzung nach Anspruch 6, **dadurch gekennzeichnet, dass** der Rest R2 OH oder O-$C_1$-$C_6$-Alkyl bedeutet.

8. Pigmentzusammensetzung nach Anspruch 6, **dadurch gekennzeichnet, dass** der Rest -CO-R2 eine Amidgruppe mit R2 gleich $NH_2$,

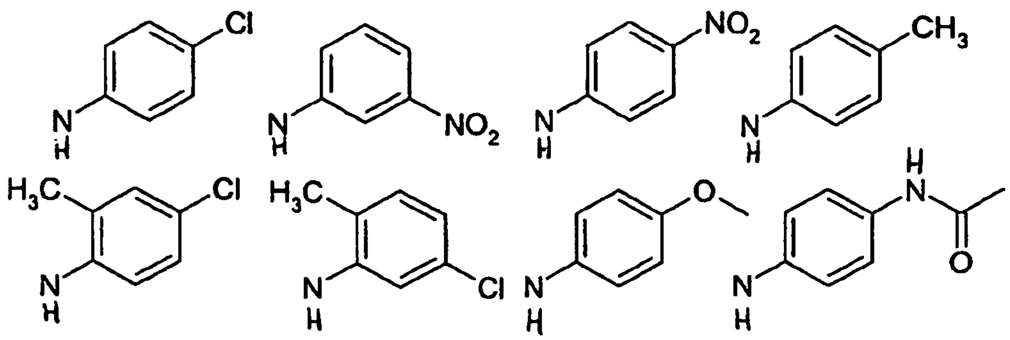

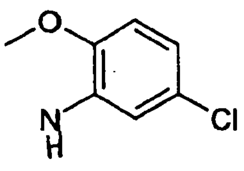

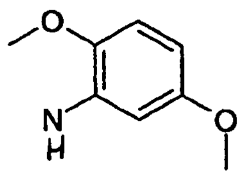

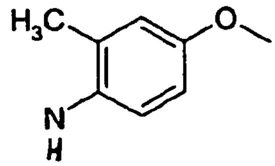

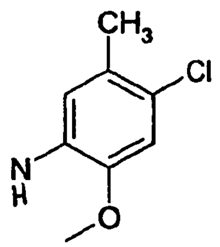

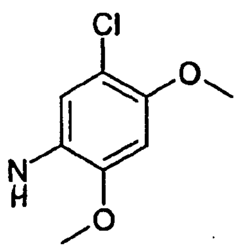

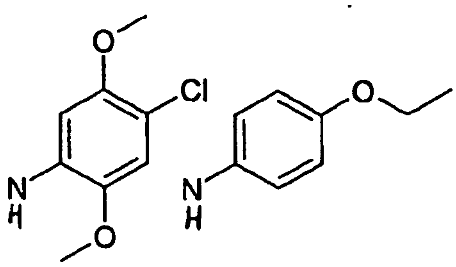

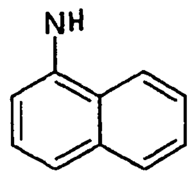 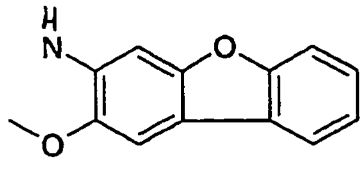 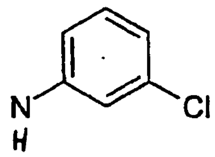

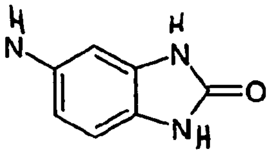

bedeutet, wobei in den vorstehenden Formeln die Bindung zur Carbonylgruppe über die freie Aminogruppe N - des Aromatenringes erfolgt.

**9.** Pigmentzusammensetzung nach Anspruch 5, **dadurch gekennzeichnet, dass** das Dispergiermittel ein Pigmentdispergator der Formel (5) oder (6) ist

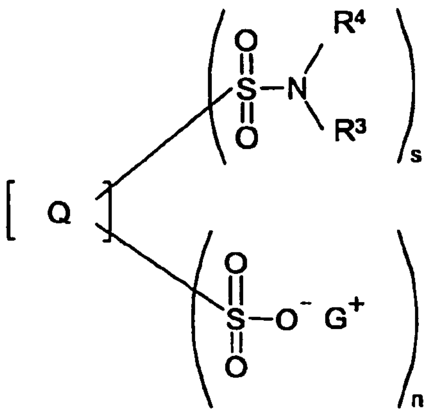

(5)

worin

Q ein Rest eines organischen Pigments aus der Gruppe der Perinon-, Chinacridon-, Chinacridonchinon-, Anthanthron-, Indanthron-, Dioxazin-, wie beispielsweise Triphendioxazine, Diketopyrrolopyrrol-, Indigo-, Thioindigo-, Thiazinindigo-, Isoindolin-, Isoindolinon-, Pyranthron-, Isoviolanthron-, Flavanthron- oder Anthrapyrimidin-Pigmente ist;
s eine Zahl von 1 bis 5 darstellt;
n eine Zahl von 0 bis 4, darstellt; wobei die Summe von s und n 1 bis 5 beträgt;
$R^3$ einen verzweigten oder unverzweigten, gesättigten oder ungesättigten, aliphatischen Kohlenwasserstoffrest mit 1 bis 20 C-Atomen, oder einen $C_5$-$C_7$-Cycloalkylrest, oder einen araliphatischen oder aromatischen Rest mit 1, 2 oder 3 aromatischen Ringen, wobei die Ringe kondensiert vorliegen oder durch eine Bindung verknüpft sein können, oder einen heterocyclischen Rest mit 1, 2 oder 3 Ringen, enthaltend 1, 2, 3 oder 4 Heteroatome aus der Gruppe O, N und S, oder eine Kombination davon bedeutet; wobei die genannten Kohlenwasserstoff-, Cycloalkyl-, Aromaten-, Araliphaten- und Heteroaromaten-Reste durch 1, 2, 3 oder 4 Substituenten aus der Gruppe OH, CN, F, Cl, Br, $NO_2$, $CF_3$, $C_1$-$C_6$-Alkoxy, S-$C_1$-$C_6$-Alkyl, $NHCONH_2$, $NHC(NH)NH_2$, NHCO-$C_1$-$C_6$-Alkyl, $C_1$-$C_6$-Alkyl, $COOR^5$, $CONR^5R^6$, $NR^5R^6$, $SO_3R^5$, $SO_2$-$NR^5R^6$, $SO_3^-E^+$ oder $COO^-E^+$ substituiert sein können, wobei $R^5$ und $R^6$ gleich oder verschieden sind und Wasserstoff, Phenyl oder $C_1$-$C_6$-Alkyl bedeuten;

$R^4$ Wasserstoff oder $R^3$ bedeutet;
$E^+$, $G^+$ unabhängig voneinander $H^+$ oder das Äquivalent $M^{p+}/m$ eines Metallkations $M^{p+}$ aus der 1. bis 5. Hauptgruppe oder aus der 1. oder 2. oder der 4. bis 8. Nebengruppe des Periodensystems der chemischen Elemente bezeichnet, wobei m eine der Zahlen 1, 2 oder 3 und p die Zahl 1, 2 oder 3 bedeutet; oder ein substituiertes oder unsubstituiertes Ammoniumion bezeichnet;

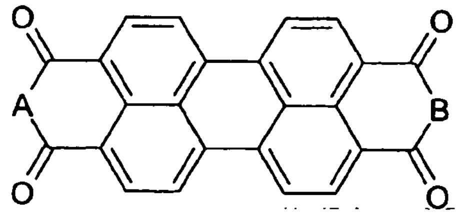

(6)

worin

A einen bivalenten Rest -O-, $-NR^3-$, $-NR^{16}-SO_3^-\ G^+$,
B einen bivalenten Rest $-NR^{16}-SO_3^-\ G^+$, wobei $R^{16}$ für eine geradkettige oder verzweigte $C_1$-$C_6$-Alkylenkette steht und $R^3$ und $G^4$ die vorstehend genannten Bedeutungen besitzen.

**10.** Pigmentzusammensetzung nach einem oder mehreren der Ansprüche 2 bis 8, enthaltend einen basischen Pigmentdispergator der Formel (29)

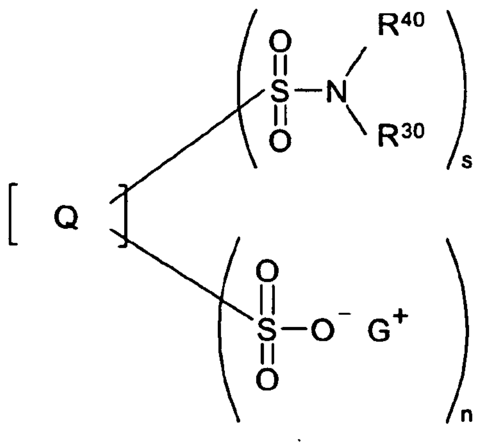

(29)

worin

Q ein Rest eines organischen Pigments aus der Gruppe der Perinon-, Chinacridon-, Chinacridonchinon-, Anthanthron-, Indanthron-, Dioxazin-, Diketopyrrolopyrrol-, Indigo-, Thioindigo-, Thiazinindigo-, Isoindolin-, Isoindolinon-, Pyranthron-, Isoviolanthron-, Flavanthron- oder Anthrapyrimidin-Pigmente ist;
s eine Zahl von 1 bis 5 darstellt;
n eine Zahl von 0 bis 4 darstellt; wobei die Summe von s und n 1 bis 5 beträgt und s größer als n ist;
$R^{30}$ einen verzweigten oder unverzweigten, gesättigten oder ungesättigten, aliphatischen Kohlenwasserstoffrest mit 1 bis 20 C-Atomen, oder einen $C_5$-$C_7$-Cycloalkylrest, oder einen araliphatischen oder aromatischen Rest mit 1, 2 oder 3 aromatischen Ringen, wobei die Ringe kondensiert vorliegen oder durch eine Bindung verknüpft sein können, oder einen heterocyclischen Rest mit 1, 2 oder 3 Ringen, enthaltend 1, 2, 3 oder 4 Heteroatome aus der Gruppe O, N und S, oder eine Kombination davon bedeutet; wobei die genannten Kohlenwasserstoff-, Cycloalkyl-, Aromaten-, Araliphaten- und Heteroaromaten-Reste durch 1, 2, 3 oder 4 Substituenten aus der Gruppe OH, CN, F, Cl, Br, $NO_2$, $CF_3$, $C_1$-$C_6$-Alkoxy, S-$C_1$-$C_6$-Alkyl, $NHCONH_2$, $NHC(NH)NH_2$, NHCO-$C_1$-$C_6$-Alkyl, $C_1$-$C_6$-Alkyl, $CONR^5R^6$, $NR^5R^6$ substituiert sein können, wobei $R^5$ und $R^6$ gleich oder verschieden sind

und Wasserstoff, Phenyl oder $C_1$-$C_6$-Alkyl bedeuten;
$R^{40}$ Wasserstoff oder $R^{30}$ bedeutet;
$G^+$ $H^+$, ein Alkalimetall oder ein substituiertes oder unsubstituiertes Ammoniumion bezeichnet.

**11.** Pigmentzusammensetzung nach Anspruch 10, **dadurch gekennzeichnet, dass**

Q ein Rest eines organischen Pigments aus der Gruppe der Diketopyrrolopyrrol-Pigmente, bevorzugt C.I. Pigment Red 255 oder 264, oder der Chinacridon-Pigmente, bevorzugt C.I. Pigment Violet 19 oder Pigment Red 122;
$R^{30}$ $C_1$-$C_6$-Alkyl, das durch $NR^5R^6$substituiert ist, wobei $R^5$ und $R^6$ gleich oder verschieden sind und Wasserstoff oder $C_1$-$C_6$-Alkyl bedeuten;
$R^{40}$ Wasserstoff,
$G^+$ Wasserstoff, Li, Na, K oder ein Ammoniumion, bedeuten.

**12.** Pigmentzusammensetzung nach Anspruch 10 oder 11, enthaltend 1 bis 25 Gew.-%, insbesondere 5 bis 15 Gew.-%, des unverlackten, sulfogruppenhaltigen Monoazofarbstoffes, und 1 bis 25 Gew.-%, insbesondere 5 bis 15 Gew.-%, des Pigmentdispergators der Formel (29), bezogen auf die eingesetzte Mischung der Pigmente der Formeln (I) bis (III)

**13.** Verfahren zur Herstellung der Pigmentzusammensetzung nach einem oder mehreren der Ansprüche 2 bis 12, **dadurch gekennzeichnet, dass** man die Mischung der Verbindungen der Formeln (I), (II) und (III) vor, während und/oder nach einer Feinverteilung, oder während und/oder nach einer Finishbehandlung mit dem unverlackten, sulfogruppenhaltigen Monoazofarbstoff und ggf. dem Pigmentdispergator versetzt.

**14.** Verwendung einer Pigmentzusammensetzung nach einem oder mehreren der Ansprüche 1 bis 12 zum Pigmentieren von Kunststoffen, Harzen, Lacken, Anstrichfarben, elektrophotographischen Tonern und Entwicklern, Farbfiltern sowie von Tinten, insbesondere Inkjet-Tinten, und Druckfarben.

**15.** Farbfilter, enthaltend eine färberisch wirksame Menge einer Pigmentzusammensetzung nach einem oder mehreren der Ansprüche 1 bis 12.

## Claims

**1.** A pigment composition of compounds of the formulae (I), (II) and (III), **characterized by** a median particle size $d_{50}$ in the range from 10 to 60 nm, less than 5% by volume of the particles being greater than 70 nm,

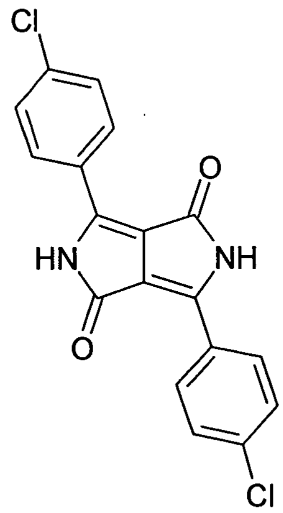

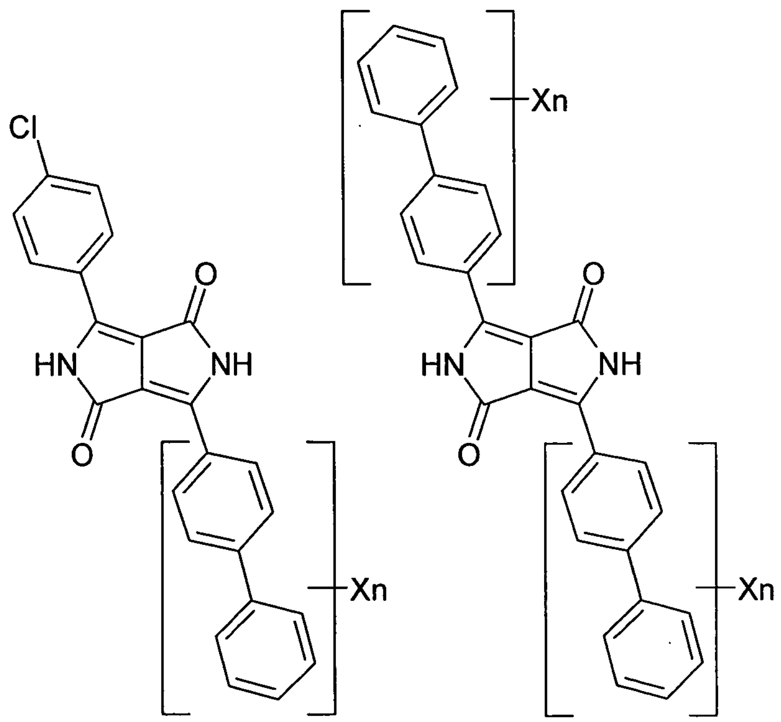

(I) (II) (III)

obtainable by reaction of 1 mol of a succinic diester with 2 mol of a mixture of nitriles A-CN and B-CN, the molar ratio of A-CN and B-CN in the nitrile mixture being in the range from 99.5:0.5 to 85.0:15, relative to each other, A-CN being 4-chlorobenzonitrile and B-CN being a nitrile of the formula (IV)

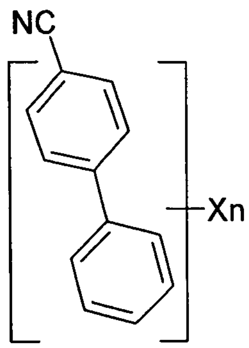

(IV)

where

n is a number from 0 to 4; and
X is OH, F, Cl, Br, CN, $CF_3$, nitro, $C_1$-$C_8$-alkyl, $C_5$-$C_7$-cycloalkyl, $C_2$-$C_8$-alkenyl, $C_1$-$C_8$-alkoxy, phenyl, benzyl.

2. A pigment composition of pigments of the formulae (I), (II) and (III), **characterized by** a median particle size $d_{50}$ in the range from 10 to 60 nm, less than 5% by volume of the particles being greater than 70 nm

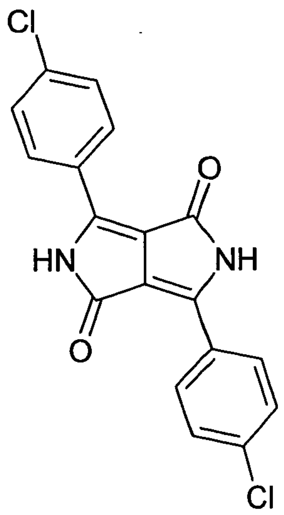

(I)

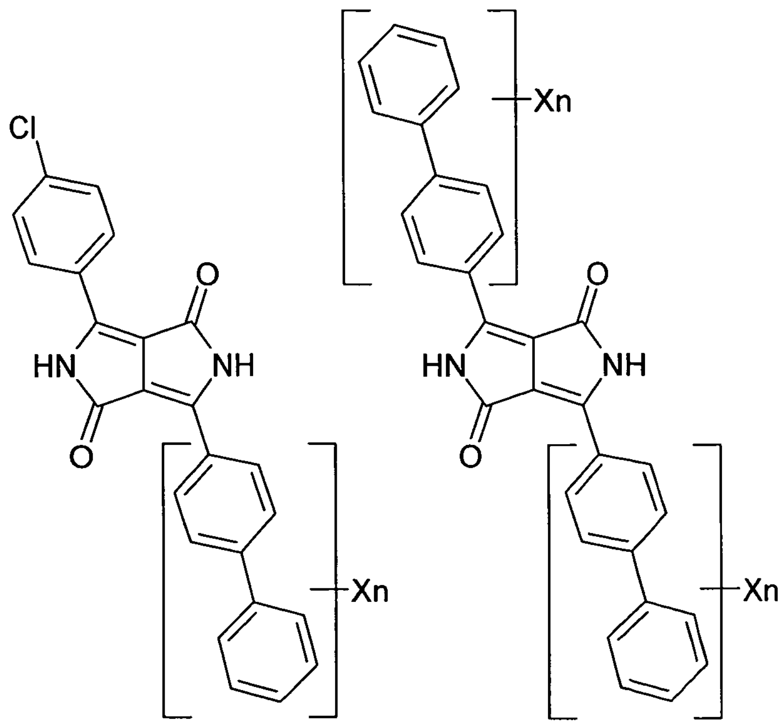

(II) (III)

where

n is a number from 0 to 4; and
X is OH, F, Cl, Br, CN, $CF_3$, nitro, $C_1$-$C_8$-alkyl, $C_5$- $C_7$-cycloalkyl, $C_2$-$C_8$-alkenyl, $C_1$-$C_8$-alkoxy, phenyl, benzyl;

and containing at least one dispersant from the group of the unlaked sulfo-containing monoazo dyes.

**3.** The pigment composition as claimed in claim 1 or 2, wherein n is zero.

**4.** The pigment composition as claimed in one or more of claims 1 to 3, wherein the length to width ratio of the pigment particles is between 2:1 and 1:1.

**5.** The pigment composition as claimed in one or more of claims 1 to 4, containing one or more auxiliaries from the group of the surfactants, dispersants, fillers, standardizers, resins, waxes, defoamers, dustproofers, extenders, antistats, preservatives, dryness retarders, wetters, antioxidants, UV absorbers and light stabilizers.

**6.** The pigment composition as claimed in one or more of claims 2 to 5, wherein the unlaked sulfo-containing monoazo dye is a compound of the formulae (IV), (V), (VI) or (VII)

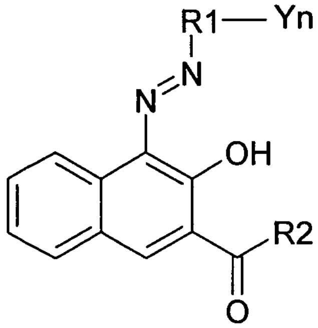

(IV)

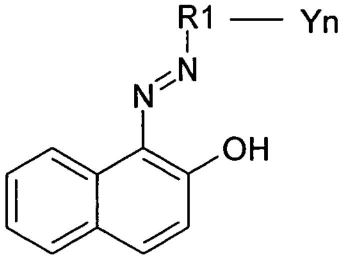

(V)

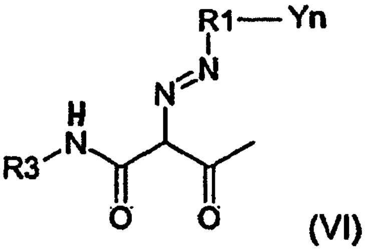

(VI)

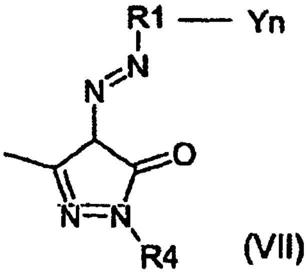

(VII)

where

R1 is an aromatic radical having 1, 2 or 3 aromatic rings, the rings being fused or linked by a bond, or is a heterocyclic radical having 1, 2 or 3 rings containing 1, 2, 3 or 4 heteroatoms from the group consisting of 0, N and S; or a combination thereof;

where the aromatic and heteroaromatic radicals mentioned may be substituted by 1, 2, 3 or 4 substituents from the group consisting of OH, CN, F, Cl, Br, $NO_2$, $CF_3$, $C_1$-$C_6$-alkoxy, S-$C_1$-$C_6$-alkyl, $NHCONH_2$, $NHC(NH)NH_2$, NHCO-$C_1$-$C_6$-alkyl, $C_1$-$C_6$-alkyl, COOR5, CONR5R6, NR5R6, $SO_3R5$, $SO_2$-NR5R6 and $COO^-E^+$, where R5 and R6 are the same or different and are each hydrogen, phenyl or $C_1$-$C_6$-alkyl and $E^+$ is hydrogen, lithium, sodium, potassium, rubidium, cesium or an unsubstituted ammonium ion;

Y is $SO_3^-$ $E^+$ or Z-$SO_3^-E^+$, where Z is $C_1$-$C_{10}$-alkylene or phenylene;

n is a number from 1, 2 or 3;

R2 is -$OR^8$ or -$NHR^8$,

where $R^8$ is H, $C_1$-$C_6$-alkyl, benzyl, an aromatic radical having 1, 2 or 3 aromatic rings, the rings being fused or linked by a bond, or is a heterocyclic radical having 1, 2 or 3 rings containing 1, 2, 3 or 4 heteroatoms from the group consisting of O, N and S; or a combination thereof;

where the aromatic and heteroaromatic radicals mentioned may each be substituted by 1, 2, 3 or 4 substituents from the group consisting of OH, $C_1$-$C_6$-alkoxy, S-$C_1$-$C_6$-alkyl, halogen, such as F, Cl, Br, $NHCONH_2$, NHC (NH) $NH_2$, NHCO-$C_1$-$C_6$-alkyl, $C_1$-$C_6$- alkyl, nitro, COOR5, CONR5R6, $SO_3R5$, $SO_2$-NR5R6, $NR^9R^{10}$, $SO_3^-E^+$ and $COO^-E^+$, where R5 and R6 are the same or different and are each hydrogen, phenyl or $C_1$-$C_6$-alkyl; $R^9$ and $R^{10}$ are the same or different and are each hydrogen, phenyl or $C_1$-$C_6$-alkyl;

R3 and R4 are each an aromatic radical having 1, 2 or 3 aromatic rings, the rings being fused or linked by a bond, or a heterocyclic radical having 1, 2 or 3 rings containing 1, 2, 3 or 4 heteratoms from the group consisting of O, N and S; or a combination thereof;

where the aromatic and heteroaromatic radicals mentioned may each be substituted by 1, 2, 3 or 4 substituents from the group consisting of OH, $C_1$-$C_6$-alkoxy, S-$C_1$-$C_6$-alkyl, halogen, such as F, Cl, Br, $NHCONH_2$, NHC (NH)$NH_2$, NHCO-$C_1$-$C_6$-alkyl, $C_1$-$C_6$- alkyl, nitro, COOR5, CONR5R6, $SO_3R5$, $SO_2$-NR5R6, $NR^9R^{10}$, $SO3^-E^+$ and $COO^-E^+$, where R5 and R6 are the same or different and are each hydrogen, phenyl or $C_1$-$C_6$-alkyl; $R^9$ and $R^{10}$ are the same or different and are each hydrogen, phenyl or $C_1$-$C_6$-alkyl.

**7.** The pigment composition as claimed in claim 6, wherein the R2 radical is OH or O-$C_1$-$C_6$-alkyl.

**8.** The pigment composition as claimed in claim 6, wherein the -CO-R2 radical is an amide group where R2 is $NH_2$,

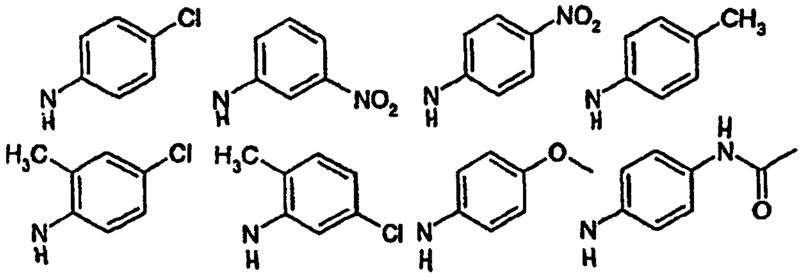

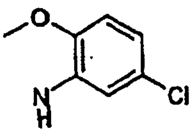

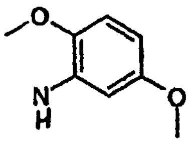

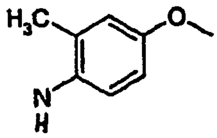

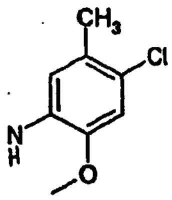

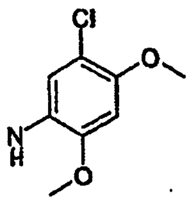

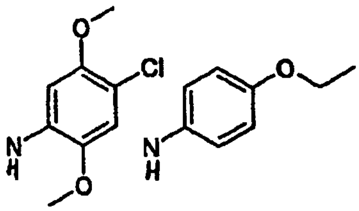

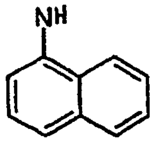

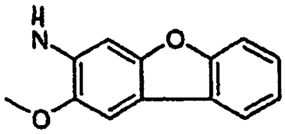

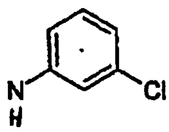

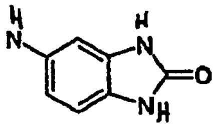

where the bond to the carbonyl group in the above formulae is via the free amino group N- of the aromatic ring.

**9.** The pigment composition as claimed in claim 5, wherein the dispersant is a pigment dispersant of the formula (5) or (6)

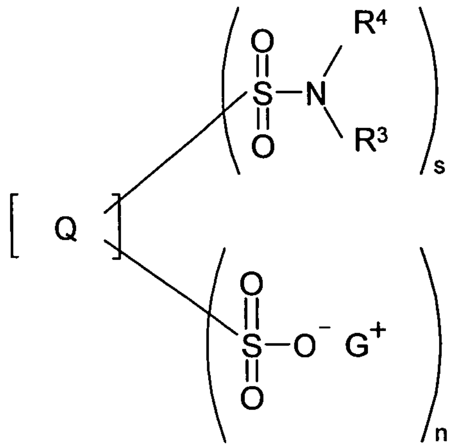

(5)

where

Q is a residue of an organic pigment from the group of the perinone pigments, quinacridone pigments, quinacridonequinone pigments, anthanthrone pigments, indanthrone pigments, dioxazine pigments, for example triphendioxazines, diketopyrrolopyrrole pigments, indigo pigments, thioindigo pigments, thiazineindigo pigments, isoindoline pigments, isoindolinone pigments, pyranthrone pigments, isoviolanthrone pigments, flavanthrone pigments or anthrapyrimidine pigments;
s is a number from 1 to 5;
n is a number from 0 to 4; the sum total of s and n being 1 to 5;
$R^3$ is a branched or unbranched, saturated or unsaturated, aliphatic hydrocarbyl radical having 1 to 20 carbon atoms, or is a $C_5$-$C_7$-cycloalkyl radical, or is an araliphatic or aromatic radical having 1, 2 or 3 aromatic rings, the rings being fused or linked by a bond, or is a heterocyclic radical having 1, 2 or 3 rings containing 1, 2, 3 or 4 heteroatoms from the group consisting of O, N and S, or a combination thereof; where the hydrocarbyl, cycloalkyl, aromatic, araliphatic and heteroaromatic radicals mentioned may be substituted by 1, 2, 3 or 4 substituents from the group consisting of OH, CN, F, Cl, Br, $NO_2$, $CF_3$, $C_1$-$C_6$-alkoxy, S-$C_1$-$C_6$-alkyl, $NHCONH_2$, $NHC(NH)NH_2$, NHCO-$C_1$-$C_6$-alkyl, $C_1$-$C_6$-alkyl, $COOR^5$, $CONR^5R^6$, $NR^5R^6$, $SO_3R^5$, $SO_2$-$NR^5R^6$, $SO_3^-E^+$ and $COO^-E^+$, where $R^5$ and $R^6$ are the same or different and are each hydrogen, phenyl or $C_1$-$C_6$-alkyl;
$R^4$ is hydrogen or $R^3$;
$E^+$, $G^+$ are independently $H^+$ or the equivalent $M^{p+}/m$ of a metal cation $M^{p+}$ from the 1st to 5th main group or from the 1st or 2nd or 4th to 8th transition group of the periodic table, where m is one of the numbers 1, 2 or 3 and p is 1, 2 or 3; or a substituted or unsubstituted ammonium ion;

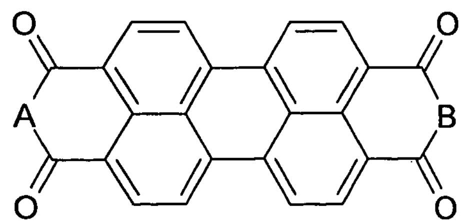

(6)

where

A is a bivalent radical -O-, $-NR^3-$, $-NR^{16}-SO_3^-\ G^+$,
B is a bivalent radical $-NR^{16}-SO_3^-\ G^+$, where $R^{16}$ is a straight-chain or branched $C_1$-$C_6$- alkylene chain and $R^3$ and $G^+$ are each as defined above.

**10.** The pigment composition as claimed in one or more of claims 2 to 8, containing a basic pigment dispersant of the formula (29)

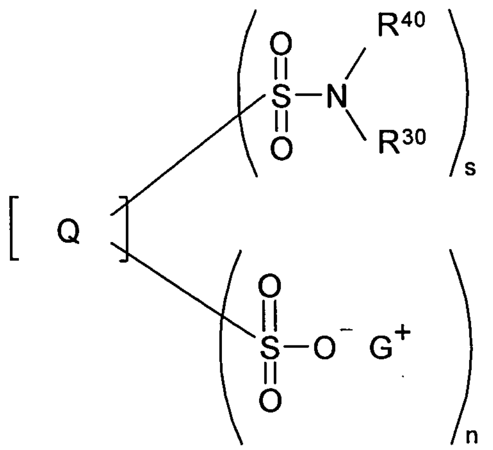

(29)

where

Q is a residue of an organic pigment from the group of the perinone pigments, quinacridone pigments, quinacridonequinone pigments, anthanthrone pigments, indanthrone pigments, dioxazine pigments, diketopyrrolopyrrole pigments, indigo pigments, thioindigo pigments, thiazineindigo pigments, isoindoline pigments, isoindolinone pigments, pyranthrone pigments, isoviolanthrone pigments, flavanthrone pigments or anthrapyrimidine pigments;
s is a number from 1 to 5;
n is a number from 0 to 4; the sum total of s and n being 1 to 5 and s being greater than n;
$R^{30}$ is a branched or unbranched, saturated or unsaturated, aliphatic hydrocarbyl radical having 1 to 20 carbon atoms, or is a $C_5$-$C_7$-cycloalkyl radical, or is an araliphatic or aromatic radical having 1, 2 or 3 aromatic rings, the rings being fused or linked by a bond, or is a heterocyclic radical having 1, 2 or 3 rings containing 1, 2, 3 or 4 heteroatoms from the group consisting of O, N and S, or a combination thereof; where the hydrocarbyl, cycloalkyl, aromatic, araliphatic and heteroaromatic radicals mentioned may be substituted by 1, 2, 3 or 4 substituents from the group consisting of OH, CN, F, Cl, Br, $NO_2$, $CF_3$, $C_1$-$C_6$-alkoxy, S-$C_1$-$C_6$-alkyl, $NHCONH_2$, $NHC(NH)NH_2$, NHCO-$C_1$-$C_6$-alkyl, $C_1$-$C_6$-alkyl, $CONR^5R^6$, $NR^5R^6$, where $R^5$ and $R^6$ are the same or different and are each hydrogen, phenyl or $C_1$-$C_6$-alkyl;
$R^{40}$ is hydrogen or $R^{30}$ ;
$G^+$ is $H^+$, an alkali metal or a substituted or unsubstituted ammonium ion.

**11.** The pigment composition as claimed in claim 10, wherein

Q is a residue of an organic pigment from the group of the diketopyrrolopyrrole pigments, preferably C.I. Pigment Red 255 or 264, or of the quinacridone pigments, preferably C.I. Pigment Violet 19 or Pigment Red 122;
$R^{30}$ is $C_1$-$C_6$-alkyl which is substituted by $NR^5R^6$, where $R^5$ and $R^6$ are the same or different and are each hydrogen or $C_1$-$C_6$-alkyl;
$R^{40}$ is hydrogen,
$G^+$ is hydrogen, Li, Na, K or an ammonium ion.

**12.** The pigment composition as claimed in claim 10 or 11, containing 1% to 25% by weight, and in particular 5% to 15% by weight of the unlaked sulfo-containing monoazo dye, and
1% to 25% by weight and in particular 5% to 15% by weight of the pigment dispersant of the formula (29), based on the mixture used of the pigments of the formulae (I) to (III).

**13.** A process for producing the pigment composition as claimed in one or more of claims 2 to 12, which comprises the mixture of the compounds of the formulae (I), (II) and (III) being admixed with the unlaked sulfo-containing monoazo dye and optionally the pigment dispersant before, during and/or after a conversion into a fine state of subdivision, or during and/or after a finishing treatment.

**14.** The use of a pigment composition as claimed in one or more of claims 1 to 12 for pigmentation of plastics, resins,

coatings, paints, electrophotographic toners and developers, color filters and also of liquid inks, in particular inkjet inks, and printing inks.

**15.** A color filter comprising a coloristically effective amount of a pigment composition as claimed in one or more of claims 1 to 12.

## Revendications

**1.** Composition de pigment à base de composés de formules (I), (II) et (III), **caractérisée par** une taille moyenne de particule $d_{50}$ de 10 à 60 nm, moins de 5 % en volume des particules ayant une taille supérieure à 70 nm,

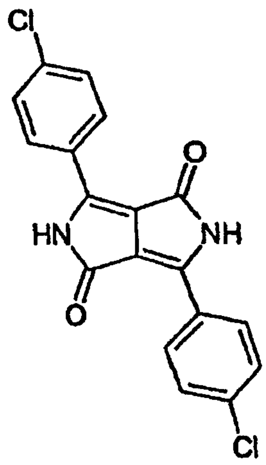

(I)

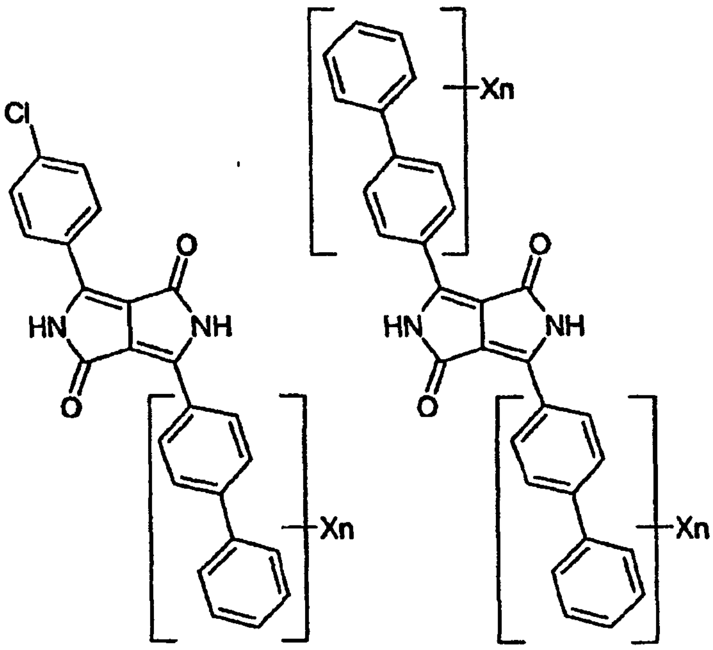

(II) (III)

pouvant être obtenue par mise en réaction de 1 mole d'un diester d'acide succinique avec 2 moles d'un mélange de nitriles A-CN et B-CN, dans le mélange de nitriles A-CN et B-CN étant présents l'un par rapport à l'autre en un rapport molaire de 99,5:0,5 à 85,0:15, et A-CN désignant le 4-chlorobenzonitrile et B-CN désignant un nitrile de formule (IV),

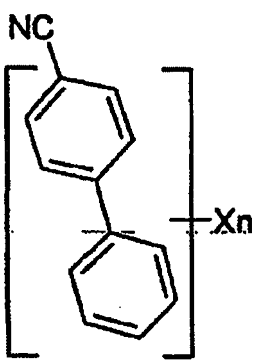

(IV)

dans laquelle

n représente un nombre de 0 à 4 ; et
X est OH, F, Cl, Br, CN, $CF_3$, nitro, alkyle en $C_1$-$C_8$, cycloalkyle en $C_5$-$C_7$, alcényle en $C_2$-$C_8$, alcoxy en $C_1$-$C_8$, phényle, benzyle.

2. Composition de pigment à base de pigments de formules (I), (II) et (III), **caractérisée par** une taille moyenne de particule $d_{50}$ de 10 à 60 nm, moins de 5 % en volume des particules ayant une taille supérieure à 70 nm,

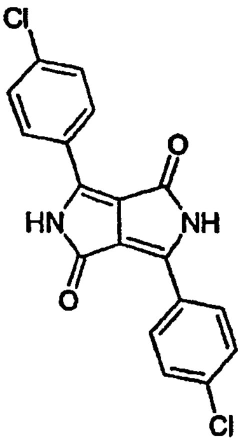

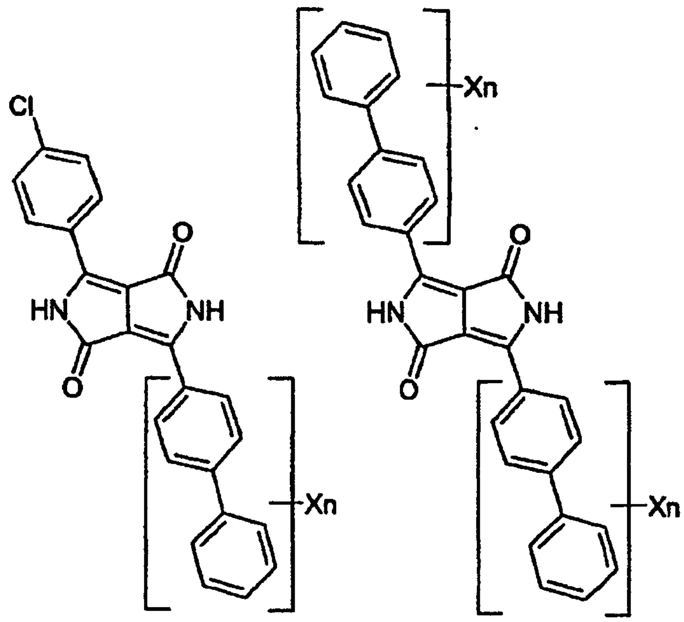

(I) (II) (III)

où

n représente un nombre de 0 à 4 ; et
X est OH, F, Cl, Br, CN, $CF_3$, nitro, alkyle en $C_1$-$C_8$, cycloalkyle en $C_5$-$C_7$, alcényle en $C_2$-$C_8$, alcoxy en $C_1$-$C_8$, phényle, benzyle ;

et contenant au moins un dispersant choisi dans le groupes des colorants monoazoïques non laqués contenant des groupes sulfo.

3. Composition de pigment selon la revendication 1 ou 2, **caractérisée en ce que** n est zéro.

4. Composition de pigment selon une ou plusieurs des revendications 1 à 3, **caractérisée en ce que** le rapport longueur à largeur des particules de pigment est compris entre 2:1 et 1:1.

5. Composition de pigment selon une ou plusieurs des revendications 1 à 4, contenant un ou plusieurs adjuvants choisis dans le groupe des tensioactifs, dispersants, charges, fixateurs, résines, cires, antimousses, agents antipoussière, diluants, agents antistatiques, conservateurs, ralentisseurs de séchage, agents mouillants, antioxydants, absorbeurs UV et photostabilisants.

6. Composition de pigment selon une ou plusieurs des revendications 2 à 5, **caractérisée en ce que** le colorant monoazoïque non laqué contenant des groupes sulfo est un composé de formules (IV), (V), (VI) ou (VII)

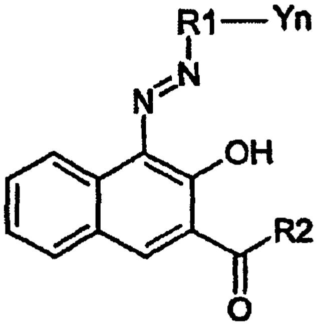

(IV)

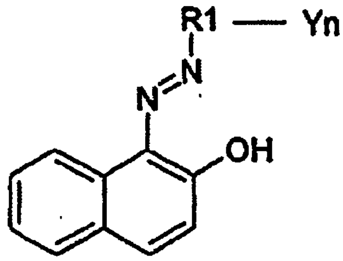

(V)

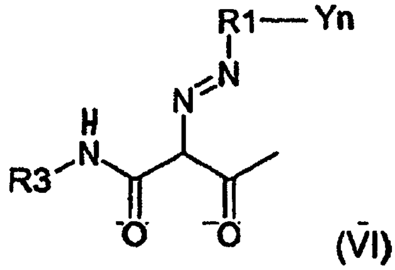

(VI)

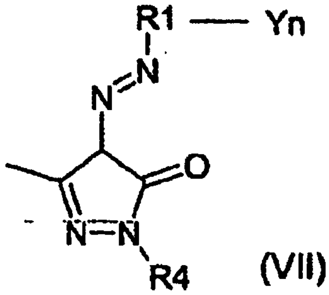

(VII)

dans lesquelles

R1 représente un radical aromatique à 1, 2 ou 3 noyaux aromatiques, les noyaux pouvant être condensés ou être liés par une liaison, ou un radical hétérocyclique à 1, 2 ou 3 cycles, contenant 1, 2, 3 ou 4 hétéroatomes choisis dans le groupe constitué par O, N et S; ou une combinaison de ceux-ci ;
lesdits radicaux aromatiques et hétéroaromatiques pouvant porter 1, 2, 3 ou 4 substituants choisis dans le groupe constitué par OH, CN, F, Cl, Br, $NO_2$, $CF_3$, alcoxy en $C_1$-$C_6$, S-alkyle ($C_1$-$C_6$) , $NHCONH_2$, NHC(NH) $NH_2$, NHCO-alkyle($C_1$-$C_6$), alkyle en $C_1$-$C_6$, COOR5, CONR5R6, NR5R6, $SO_3R5$, $SO_2$-NR5R6 ou $COO^-E^+$, R5 et R6 étant identiques ou différents et représentant un atome d'hydrogène, un groupe phényle ou alkyle en $C_1$-$C_6$ et $E^+$ représentant un atome d'hydrogène, de lithium, sodium, potassium, rubidium, césium ou un ion ammonium non substitué ;
Y représente $SO_3^-E^+$ ou Z-$SO_3^-E^+$, Z représentant un groupe alkylène en $C_1$-$C_{10}$ ou phénylène ;
n représente le nombre 1, 2 ou 3 ;
R2 représente -$OR^8$ ou -$NHR^8$, $R^8$ représentant H, alkyle en $C_1$-$C_6$, benzyle, un radical aromatique à 1, 2 ou 3 noyaux aromatiques, les noyaux pouvant être condensés ou être liés par une liaison, ou un radical hétérocyclique à 1, 2 ou 3 cycles, contenant 1, 2, 3 ou 4 hétéroatomes choisis dans le groupe constitué par O, N et S; ou une combinaison de ceux-ci ;
lesdits radicaux aromatiques et hétéroaromatiques pouvant porter chacun 1, 2, 3 ou 4 substituants choisis dans le groupe constitué par OH, alcoxy en $C_1$-$C_6$, S-alkyle($C_1$-$C_6$), halogène tel que F, Cl, Br, $NHCONH_2$, NHC(NH) $NH_2$, NHCO-alkyle($C_1$-$C_6$), alkyle en $C_1$-$C_6$, nitro, COOR5, CONR5R6, $SO_3R5$, $SO_2$-NR5R6. $NR^9R^{10}$, $SO_3^-E^+$ ou $COO^-E^+$, R5 et R6 étant identiques ou différents et représentant un atome d'hydrogène, un groupe phényle ou alkyle en $C_1$-$C_6$ ; $R^9$ et $R^{10}$ étant identiques ou différents et représentant un atome d'hydrogène, un groupe phényle ou alkyle en $C_1$-$C_6$ ;
R3 et R4 représentent chacun un radical aromatique à 1, 2 ou 3 noyaux aromatiques, les noyaux pouvant être condensés ou être liés par une liaison, ou un radical hétérocyclique à 1, 2 ou 3 cycles, contenant 1, 2, 3 ou 4 hétéroatomes choisis dans le groupe constitué par O, N et S ; ou une combinaison de ceux-ci ;
lesdits radicaux aromatiques et hétéroaromatiques pouvant porter chacun 1, 2, 3 ou 4 substituants choisis dans le groupe constitué par OH, alcoxy en $C_1$-$C_6$, S-alkyle($C_1$-$C_6$), halogène tel que F, Cl, Br, $NHCONH_2$, NHC(NH) $NH_2$, NHCO-alkyle($C_1$-$C_6$) , alkyle en $C_1$-$C_6$, nitro, COOR5, CONR5R6, $SO_3R5$, $SO_2$-NR5R6, $NR^9R^{10}$, $SO_3^-E^+$

ou $COO^-E^+$, R5 et R6 étant identiques ou différents et représentant un atome d'hydrogène, un groupe phényle ou alkyle en $C_1$-$C_6$ ; $R^9$ et $R^{10}$ étant identiques ou différents et représentant un atome d'hydrogène, un groupe phényle ou alkyle en $C_1$-$C_6$.

**7.** Composition de pigment selon la revendication 6, **caractérisée en ce que** le radical R2 représente OH ou un groupe O-alkyle en $C_1$-$C_6$.

**8.** Composition de pigment selon la revendication 6, **caractérisée en ce que** le radical -CO-R2 représente un groupe amido où R2 représente $NH_2$,

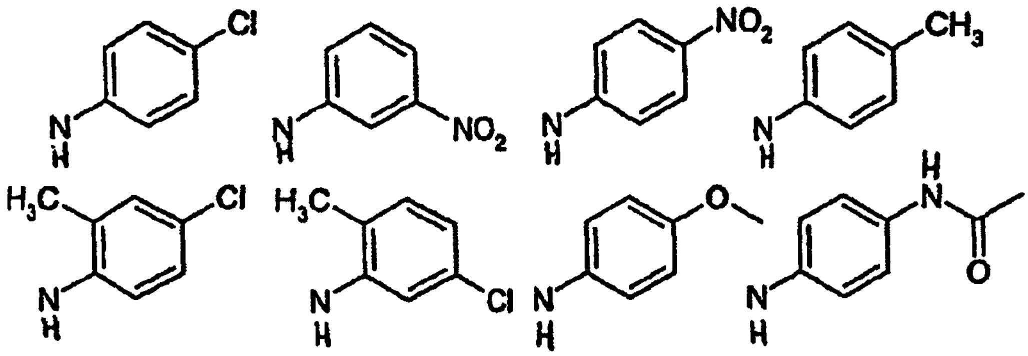

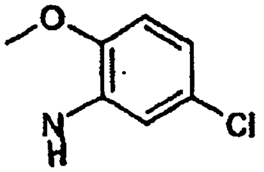

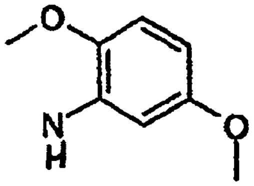

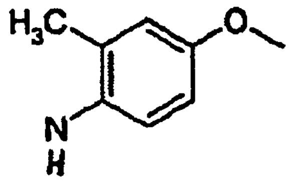

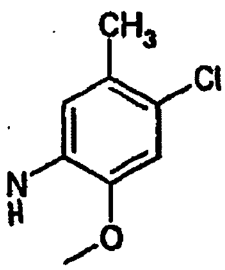

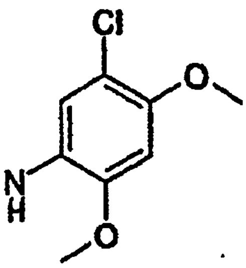

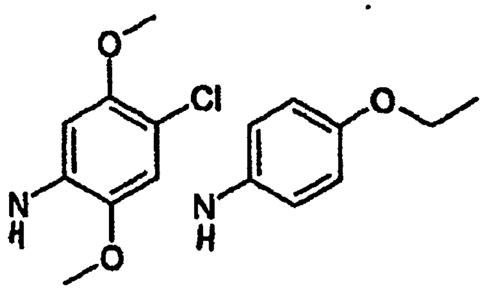

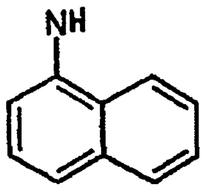

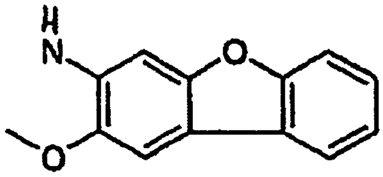

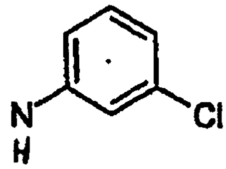

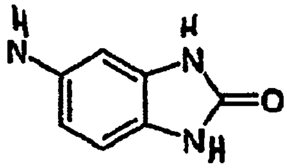

dans les formules précédentes la liaison au groupe carbonyle s'effectuant par le groupe amino N libre du noyau aromatique.

**9.** Composition de pigment selon la revendication 5, **caractérisée en ce que** le dispersant est un dispersant pigmentaire de formule (5) ou (6)

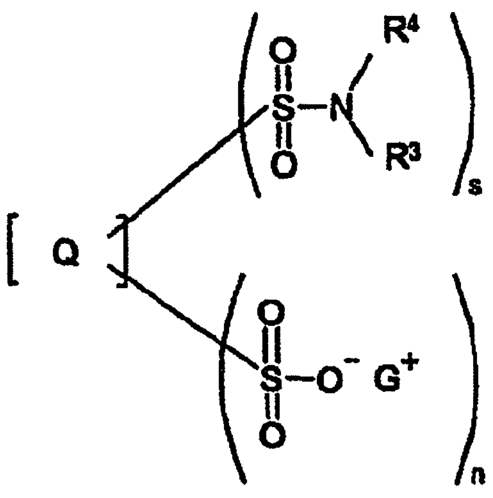

(5)

dans laquelle

Q représente un reste d'un pigment organique choisi dans le groupe des pigments périnone, quinacridone, quinacridonequinone, anthanthrone, indanthrone, dioxazine, comme par exemple les triphènedioxazines, les pigments dicétopyrrolo- pyrrole, indigo, thio-indigo, thiazine-indigo, iso-indoline, iso-indolinone, pyranthrone, isoviolanthrone, flavanthrone ou anthrapyrimidine ;
s représente un nombre valant de 1 à 5 ;
n représente un nombre valant de 0 à 4 ; la somme de s et n valant de 1 à 5 ;
$R^3$ représente un radical hydrocarboné aliphatique ramifié ou non ramifié, saturé ou insaturé, ayant de 1 à 20 atomes de carbone, ou un radical cycloalkyle en $C_5$-$C_7$, ou un radical araliphatique ou aromatique comportant 1, 2 ou 3 noyaux aromatiques, les noyaux pouvant être condensés ou liés par une liaison, ou un radical hétérocyclique à 1, 2 ou 3 cycles, contenant 1, 2, 3 ou 4 hétéroatomes choisis dans le groupe constitué par O, N et S, ou une combinaison de ceux-ci ; lesdits radicaux hydrocarbonés, cycloalkyle, aromatiques, araliphatiques et hétéroaromatiques pouvant porter 1, 2, 3 ou 4 substituants choisis dans le groupe constitué par OH, CN, F, Cl, Br, $NO_2$, $CF_3$, alcoxy en $C_1$-$C_6$, S-alkyle ($C_1$-$C_6$) $NHCONH_2$, $NHC(NH)NH_2$, NHCO-alkyle ($C_1$-$C_6$), alkyle en $C_1$-$C_6$, $COOR^5$, $CONR^5R^6$, $NR^5R^6$, $SO_3R^5$, $SO_2$-$NR^5R^6$, $SO_3^-E^+$ ou $COO^-E^+$, $R^5$ et $R^6$ étant identiques ou différents et représentant un atome d'hydrogène, un groupe phényle ou alkyle en $C_1$-$C_6$
$R^4$ représente un atome d'hydrogène ou $R^3$;
$E^+$, $G^+$ représentent, indépendamment l'un de l'autre, $H^+$ ou l'équivalent $M^{p+}/m$ d'un cation métallique $M^{p+}$ choisi dans les groupes 1A à 5A ou dans le groupe 1B ou 2B ou les groupes 4B à 8B du système périodique des éléments chimiques, m représentant l'un des nombres 1, 2 ou 3 et p représentant le nombre 1, 2 ou 3 ; ou un ion ammonium substitué ou non substitué ;

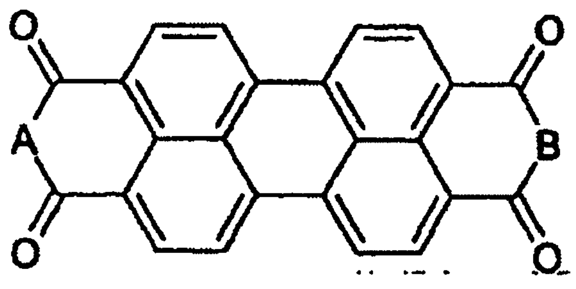

(6)

dans laquelle

A représente un radical divalent -O-, $-NR^3-$, $-NR^{16}-SO_3^-G^+$,
B représente un radical divalent $-NR^{16}-SO_3^-G^+$,

$R^{16}$ représentant une chaîne alkylène en $C_1$-$C_6$ droite ou ramifiée
et $R^3$ et $G^+$ ayant les significations données précédemment.

**10.** Composition de pigment selon une ou plusieurs des revendications 2 à 8, contenant un dispersant pigmentaire basique de formule (29)

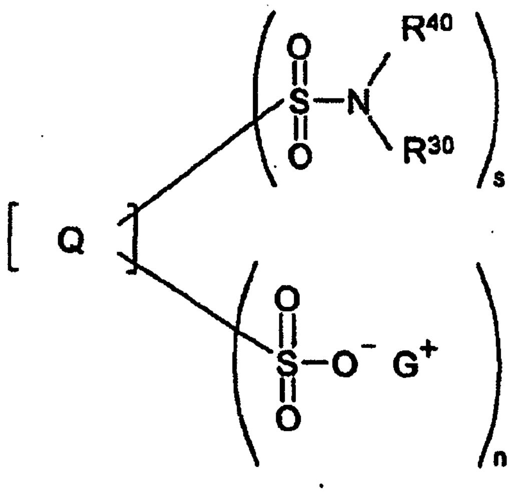

(29)

dans laquelle

Q représente un reste d'un pigment organique choisi dans le groupe des pigments périnone, quinacridone, quinacridonequinone, anthanthrone, indanthrone, dioxazine, dicétopyrrolopyrrole, indigo, thio-indigo, thiazine-indigo, iso- indoline, iso-indolinone, pyranthrone, isoviolanthrone, flavanthrone ou anthrapyrimidine ;
s représente un nombre valant de 1 à 5 ;
n représente un nombre valant de 0 à 4 ; la somme de s et n valant de 1 à 5, et s étant supérieur à n ;
$R^{30}$ représente un radical hydrocarboné aliphatique ramifié ou non ramifié, saturé ou insaturé, ayant de 1 à 20 atomes de carbone, ou un radical cycloalkyle en $C_5$-$C_7$, ou un radical araliphatique ou aromatique comportant 1, 2 ou 3 noyaux aromatiques, les noyaux pouvant être condensés ou liés par une liaison, ou un radical hétérocyclique à 1, 2 ou 3 cycles, contenant 1, 2, 3 ou 4 hétéroatomes choisis dans le groupe constitué par O, N et S, ou une combinaison de ceux-ci ; lesdits radicaux hydrocarbonés, cycloalkyle, aromatiques, araliphatiques et hétéroaromatiques pouvant porter 1, 2, 3 ou 4 substituants choisis dans le groupe constitué par OH, CN, F, Cl, Br, $NO_2$, $CF_3$, alcoxy en $C_1$-$C_6$, S-alkyle($C_1$-$C_6$), $NHCONH_2$, $NHC(NH)NH_2$, NHCO-alkyle($C_1$-$C_6$), alkyle en $C_1$-$C_6$, $CONR^5R^6$, $NR^5R^6$, $R^5$ et $R^6$ étant identiques ou différents et représentant un atome d'hydrogène, un groupe phényle ou alkyle en $C_1$-$C_6$;
$R^{40}$ représente un atome d'hydrogène ou $R^{30}$ ;
$G^+$ représente $H^+$, un métal alcalin ou un ion ammonium substitué ou non substitué.

**11.** Composition de pigment selon la revendication 10, **caractérisée en ce que**

Q représente un reste d'un pigment organique choisi dans le groupe des pigments dicétopyrrolopyrrole, de préférence C.I. Pigment Red 255 ou 264, ou des pigments quinacridone, de préférence C.I. Pigment Violet 19 ou Pigment Red 122 ;
$R^{30}$ représente un groupe alkyle en $C_1$-$C_6$ qui est substitué par $NR^5R^6$, $R^5$ et $R^6$ étant identiques ou différents et représentant un atome d'hydrogène ou un groupe alkyle en $C_1$-$C_6$ ;
$R^{40}$ représente un atome d'hydrogène,
$G^+$ représente un atome d'hydrogène, Li, Na, K ou un ion ammonium.

**12.** Composition de pigment selon la revendication 10 ou 11, contenant 1 à 25 % en poids, en particulier 5 à 15 % en poids, du colorant monoazoïque non laqué, contenant des groupes sulfo, et 1 à 25 % en poids, en particulier 5 à 15 % en poids, du dispersant pigmentaire (29), par rapport au mélange utilisé des pigments de formules (I) à (III).

**13.** Procédé pour la préparation de la composition de pigments selon une ou plusieurs des revendications 2 à 12, **caractérisé en ce qu'**on ajoute au mélange des composés de formules (I), (II) et (III) avant, pendant et/ou après une fine division, ou pendant et/ou après un traitement final, le colorant monoazoïque non laqué, contenant des groupes sulfo, et éventuellement le dispersant pigmentaire.

**14.** Utilisation d'une composition de pigment selon une ou plusieurs des revendications 1 à 12, pour la pigmentation de matières plastiques, de résines, de laques, de peintures, de toners et développeurs électrophotographiques, de filtres colorés ainsi que d'encres, en particulier d'encres pour impression par jet d'encre, et d'encres d'imprimerie.

**15.** Filtre coloré, contenant une quantité, efficace pour la coloration, d'une composition de pigment selon une ou plusieurs des revendications 1 à 12.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- EP 0094911 A
- EP 0181290 A
- EP 1411092 A
- EP 0962499 A
- WO 20021085987 A
- EP 1411091 A
- US 5869625 A
- EP 1715007 A
- US 2006185558 A
- EP 0640603 A
- EP 1086067 B1
- EP 1104789 A
- DE 3106906 A
- US 5466807 A
- EP 0190999 A
- EP 1362081 A
- EP 0486531 A
- EP 3106906 A